(19) Europäisches Patentamt / European Patent Office / Office européen des brevets

(11) **EP 2 634 279 B1**

(12) **EUROPEAN PATENT SPECIFICATION**

(45) Date of publication and mention
of the grant of the patent:
**01.02.2017 Bulletin 2017/05**

(21) Application number: **11835926.4**

(22) Date of filing: **02.08.2011**

(51) Int Cl.:
*C22C 38/00* (2006.01)       *C21D 1/06* (2006.01)
*C21D 9/32* (2006.01)       *C21D 9/40* (2006.01)
*C22C 38/42* (2006.01)       *C22C 38/60* (2006.01)
*C23C 8/26* (2006.01)       *C23C 8/32* (2006.01)
*C23C 8/56* (2006.01)

(86) International application number:
**PCT/JP2011/068011**

(87) International publication number:
**WO 2012/056785 (03.05.2012 Gazette 2012/18)**

(54) **STEEL FOR SURFACE HARDENING FOR MACHINE STRUCTURAL USE, AND STEEL COMPONENT FOR MACHINE STRUCTURAL USE AND PROCESS FOR PRODUCING SAME**

STAHL ZUR OBERFLÄCHENHÄRTUNG ZUR VERWENDUNG IM MASCHINENBAU, STAHLKOMPONENTE ZUR VERWENDUNG IM MASCHINENBAU UND HERSTELLUNGSVERFAHREN DAFÜR

ACIER POUR DURCISSEMENT DE SURFACE DESTINÉ À UNE UTILISATION STRUCTURALE D'UNE MACHINE, ET COMPOSANT D'ACIER POUR UTILISATION STRUCTURALE D'UNE MACHINE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2010 JP 2010241169**

(43) Date of publication of application:
**04.09.2013 Bulletin 2013/36**

(73) Proprietor: **Nippon Steel & Sumitomo Metal Corporation**
**Tokyo 100-8071 (JP)**

(72) Inventor: **YOSHIDA, Suguru**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A2- 1 803 831          WO-A1-01/61057**
**WO-A1-2010/109778     JP-A- 2003 105 496**
**JP-A- 2005 139 485      JP-A- 2005 325 443**
**JP-A- 2008 274 367      US-A1- 2006 188 384**

**Description**

Technical Field

The present invention relates to steel for machine structural purposes for surface hardening use which is applied to power transmission parts of automobiles etc., in particular parts which require high surface fatigue strength under a corrosive environment, for example, gears, continuously variable transmissions, constant velocity joints, hubs, bearings, to steel parts for machine structural purposes, and to a method of production of those parts.

Background Art

Parts for machine structural purposes, for example, gears of automatic transmissions and sheaves of continuously variable transmissions, constant velocity joints, hubs, and other power transmission parts are required to have a high surface fatigue strength.

In the past, for the above parts, case hardened steels with C of around 0.2% (JIS SCr420, SCM420, etc.) have generally been used for the material, while a hardened layer of martensite with C of around 0.8% has been formed on the surface of the parts by carburized quenching so as to raise the surface fatigue strength in use.

However, carburization is treatment which takes a long time of 5 to 10 hours, in some cases more than 10 hours, along with the austenite transformation at the high temperature of around 950°C, so heat treatment deformation (quenching distortion) due to the crystal grain coarsening unavoidably becomes greater.

For this reason, in the case of parts for which a high precision is demanded, the parts have to be ground, honed, and otherwise finished after carburized quenching.

Further, steel parts for machine structural purposes are used in environments in which corrosion resistance is demanded. In this case, the solution employed has been (a) using as the material a steel material which is excellent in corrosion resistance in addition to surface fatigue strength, (b) improving the part properties by heat treatment, or (c) combining the steel material and heat treatment to improve the part properties.

In recent years, there has been rising demand for reducing the noise of automobile engines etc. To satisfy the demands for improvement of the corrosion resistance and reduction of noise, there are limits with the conventional method of carburization of SCr420, SCM420, etc.

Therefore, development of steel materials which are excellent in strength and corrosion resistance by using induction hardening and ferritic nitrocarburizing and other heat treatment is being studied. In induction hardening, only the surface layer part is heated in a short time for transformation to austenite and quenching, so it is possible to obtain a surface hardened part with small quenching distortion.

However, if trying to obtain a hardness equal to that of a carburized quenched material by just induction hardening, 0.8% or more of C becomes necessary. If increasing the amount of C of the steel material, the hardness of the inside, where no improvement of the surface fatigue strength is required, rises and the machineability remarkably deteriorates, so it is not possible to just increase the amount of C of the steel material.

For this reason, there are limits to raising the surface fatigue strength by just induction hardening.

Ferritic nitrocarburizing is a surface hardening method which causes nitrogen and carbon to permeate by diffusion into the steel material surface at the temperature region of 500 to 650°C below the transformation point so as to form a hardened layer and improve the wear resistance, seizing resistance, fatigue resistance, etc.

At the surface layer of the steel material, the nitrogen which penetrates the layer by diffusion forms nitrides. In general, at the surfacemost layer of the steel material, a compound layer which is comprised of $Fe_3N$, $Fe_4N$, and other nitrides is formed. At the inside from that, a nitrided layer in which N penetrates by diffusion is formed.

Ferritic nitrocarburizing can be performed at a low temperature. Further, the treatment time is 0.5 to 5 hours or shorter than carburization, so this is often used for production of steel parts where a low distortion is required. Furthermore, at the surface layer of the soft nitrided steel material, the N concentration becomes higher and the corrosion resistance is improved.

However, with just ferritic nitrocarburizing treatment, the depth of the hardened layer is small, so it is difficult to apply ferritic nitrocarburizing to the production of transmission gears etc. to which a high surfae pressure is applied.

Recently, as a technique for making up for the defects of induction hardening and ferritic nitrocarburizing and obtaining better mechanical properties, in particular raising the surface fatigue strength, the technique of ferritic nitrocarburizing, then induction hardening has been experimented with.

PLT 1 proposes the method of combining induction hardening and gas ferritic nitrocarburizing to make up for the respective defects and obtain better mechanical properties, in particular improve the softening resistance to obtain a higher surface fatigue strength.

However, with the above method, the surface hardness is high, but the concentration of N in the nitrided layer is low, so the hardness at a high temperature is low, a sufficient softening resistance cannot be obtained at the surface of a gear etc. which becomes a high temperature at the time of operation, and a high surface fatigue strength cannot be obtained.

PLT 2 proposes a method of production of combining induction hardening and ferritic nitrocarborizing to produce a part for machine structural purposes which is excellent in mechanical strength. With this method, to make nitrides form a solid solution, induction heating of 900 to 1200°C is performed.

However, there are insufficient elements which have a high affinity with N and which break down and diffuse nitrides, so high temperature heating is required. Therefore, an oxide layer is formed at the steel material surface and the mechanical properties deteriorate. Further, with the above method, formation of a thick compound layer is not considered, so it is not possible to obtain a good surface fatigue strength under a high surface pressure.

PLT 3 proposes the art of combining induction hardening and nitriding to obtain excellent mechanical properties. However, with this art, nitriding is performed at a high temperature of 600°C or more, so the compound layer is thin and, furthermore, the N concentration is low, so the amount of N which diffuses upon breakdown of the compound at the time of induction hardening is small.

In the above art, it is possible to form a compound layer by nitriding, but it is difficult to form a thick, high N concentration nitrided layer. For this reason, even if combined with induction hardening, it is not possible to form a nitrided layer with a high softening resistance and a good surface fatigue strength.

PLT 4 proposes a part for machine structural purposes which is excellent in mechanical strength and machineability which is produced by ferritic nitrocarborizing, then induction hardening and suitably balancing the amounts of Mn and S.

However, in the above parts for machine structural purposes, the mechanical strength, for example, the durability under a lubrication environment containing water, is insufficient. In a lubrication environment containing water, corrosion which occurs at the sliding surfaces of the steel part forms a starting point for early breakage of the steel part.

For this reason, in steel materials which are used in such environments, to secure the mechanical strength, in particular good fatigue properties, it is necessary to improve the corrosion resistance more.

Normally, gears and other power transmission parts are obtained by forging, then machining the steel materials (materials) to finish them to the required shapes then surface hardening them in the next step to obtain the completed parts.

The proposals in the above PLT's 1 to 4 are arts aimed at raising the strength of the working surfaces by treating medium carbon steel containing alloy elements for surface hardening. For this reason, in the above art, the hardness of the steel material (material) rises more than necessary. Further, machineability is not considered. Therefore, deterioration of the machineability cannot be avoided. As a result, the productivity falls and the manufacturing cost rises.

Therefore, in a steel material which is used for production of the above steel parts, the task is to suppress the rise in hardness in the steel material after forging and to secure machineability by addition of elements facilitating machining so as to thereby achieve an improvement in the surface fatigue strength of the surface hardened part.

Citations List

Patent Literature

PLT 1: Japanese Patent Publication (A) No. 06-172961
PLT 2: Japanese Patent Publication (A) No. 07-090363
PLT 3: Japanese Patent Publication (A) No. 2007-077411
PLT 4: WO2010/082685

JP 2003105496 discloses a high strength spring steel which has low ferrite decarburization and excellent delayed fracture resistance.

Summary of Invention

Technical Problem

The present invention, in view of the above problems, has as its task the development of a technique for making up for the defects of the low surface hardness and internal hardness of the steel material by just induction hardening or ferritic nitrocarborizing. It has as its object to solve the above task by provision of steel for machine structural purposes for surface hardening use which is used as a material for a steel part for machine structural purposes excellent in surface fatigue strength and corrosion resistance which is provided with a high surface hardness, temper softening resistance, and machineability which cannot be obtained by a conventional soft nitrided induction hardened steel part and, furthermore, is provided with a sufficient lubrication film for the working surfaces, steel parts for machine structural purposes which are produced by that steel, and a method of production of those parts.

Solution to Problem

To improve the surface fatigue strength of a steel part, it is effective to (i) improve the surface hardness, (ii) increase the depth of the steel hardened layer, and (iii) improve the softening resistance for maintaining the high temperature strength at working surfaces which become high in temperature (around 300°C).

Further, to prevent a drop in the productivity of steel parts, it is necessary to raise the machineability of the steel material (material) so as to improve the part workability. Furthermore, to prevent seizing or sticking of the working surfaces of steel parts, it is effective to form a sufficient lubrication film at the working surfaces of the steel parts.

Therefore, the inventors studied improvement of the machineability and corrosion resistance by surface hardening of the steel parts by a combination of ferritic nitrocarburizing and induction heat treatment and adjustment of the composition of ingredients of the steel material. As a result, they obtained the following discoveries (a) to (e).

(a) To increase the softening resistance, it is effective to form a nitrided layer with a high N concentration. With just nitriding treatment, even if forming a compound layer, formation of a nitrided layer with a high N concentration and a large thickness is difficult and increasing the softening resistance is impossible.

To increase the softening resistance, it is necessary to use the compound layer which is formed at the time of ferritic nitrocarburizing (layer comprised of $Fe_3N$, $Fe_4N$, or other nitrides) as the N source and break down the nitrides by the subsequent induction heating so as to make a sufficient amount of N diffuse into the steel material.

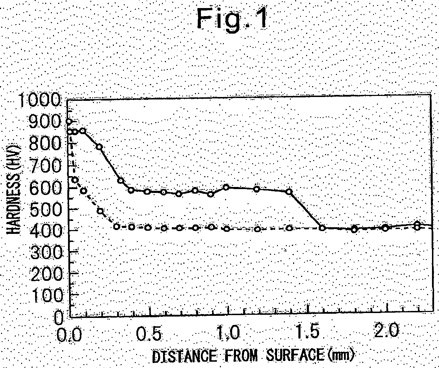

FIG. 1 shows by comparison the distribution of hardness at a cross-section from the surface in a core direction of a steel material treated by ferritic nitrocarburizing (see "dotted line" in the figure) and the distribution of hardness at a cross-section from the surface in a core direction of a steel material treated by ferritic nitrocarburizing, then induction hardening (see "solid line" in the figure).

As shown in FIG. 1, due to the ferritic nitrocarburizing, the surfacemost layer of the steel material is formed with an extremely hard compound layer, but the thickness is small. Further, due to the induction heating, the nitrides break down at the compound layer of the surfacemost layer, N diffuses to the inside, and the hardness of the surfacemost layer falls somewhat, but the hardened layer which is effective for improvement of the surface fatigue strength (nitrided layer) increases (see "solid line" in figure).

Note that, in a steel material which is treated by induction hardening, the surface layer is martensite and the core part is ferrite-pearlite.

If ferritic nitrocarburizing is used to form a thickness 10 $\mu$m or more compound layer, induction hardening may be used to form a nitrided layer with a high N concentration and large thickness. The compound layer which is formed by ferritic nitrocarburizing becomes fragile depending on the nitriding conditions and causes the mechanical properties to deteriorate, so usually the thickness of the compound layer is reduced.

However, in the present invention, conversely a compound layer of a required thickness is formed and the properties of the compound layer are actively utilized. This point is a characterizing feature of the present invention.

That is, if the compound layer of the required thickness which is formed on the surfacemost layer of the steel material by ferritic nitrocarburizing is treated by induction hardening, the structure of the surface layer of the steel material becomes martensite with a high N concentration, and the softening resistance at the time of a high temperature is strikingly increased.

(b) To use ferritic nitrocarburizing to form a thick compound layer, the amount of S which inhibits bonding of Fe and N is reduced. If making S form a solid solution in the steel material independently, the S concentrates at the steel material surface and obstructs the penetration of N.

To prevent the concentration of S at the steel material surface, a required amount of Mn is added to the steel material to immobilize the S as MnS. The amount of Mn is preferably an amount which satisfies Mn/S≥70.

(c) To raise the machineability of the steel material, an element which facilities machining which suppresses the rise of hardness of the steel material and further which contributes to improvement of the surface fatigue strength as well is added to an extent whereby the surface fatigue strength after surface hardening treatment does not deteriorate. To suppress a rise in hardness of the steel material, it is effective to not excessively add Mn, N, and other alloy elements.

Furthermore, Al and B, which contribute to improvement of the surface fatigue strength as well while improving the machineability, are compositely added. B bonds with the N in the steel material to form BN and contributes to improvement of the machineability at the time of working the steel material. B forms BN in the process of cooling with a slow cooling speed, for example, cooling after forging, and does not harden the steel material, so does not cause deterioration of the machineability.

At the time of induction heating, the BN breaks down to form solute B. At the time of quenching, the hardness of the surface layer of the steel material is improved and the surface fatigue strength of the surface layer of the steel material is improved.

Al is present in a solute state and remarkably improves the machineability of the steel material. Al also does not have any effect on the rise of hardness of the steel material. Al bonds with N to form AlN at the time of ferritic nitrocarborizing and raises the N concentration near the surface layer, so also contributes to improvement of the surface fatigue strength.

Furthermore, if compositely adding Al and B, B forms BN effective for improvement of the machineability and consumes the N in the steel material. As a result, a greater amount of solute Al is present in the steel material and the machineability is synergistically improved.

(d) To prevent seizing and sticking of the working surfaces of steel parts, it is effective to provide an oil reservoir which continuously forms a film of a lubricant. In the present invention, ferritic nitrocarborizing is used to form a compound layer at the surface layer of the steel material then induction heating is used for transformation of this to austenite and quenching to form a nitrided layer.

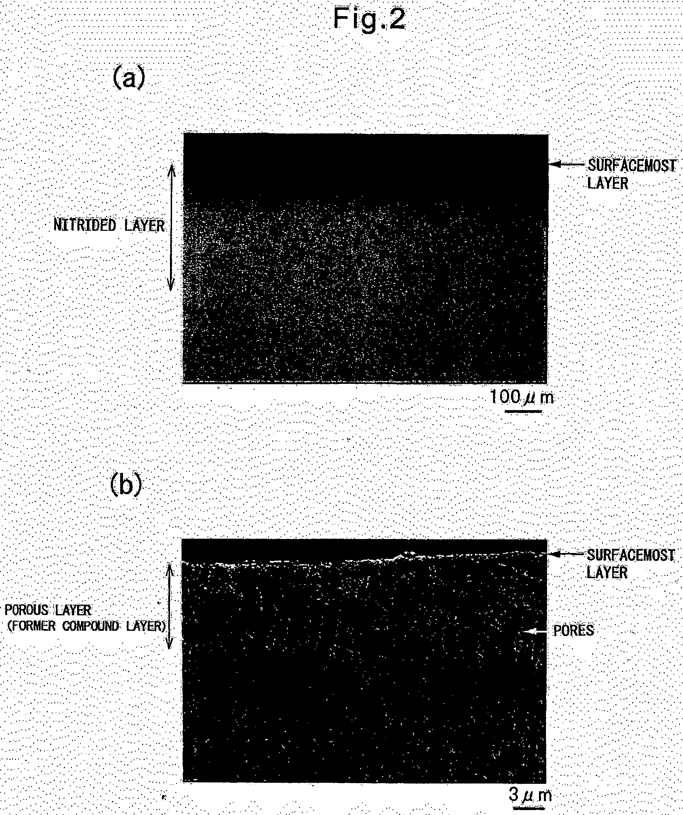

FIG. 2 is a view which shows the state of a nitrided layer which is formed at the surface of a steel material. FIG. 2(a) shows the state of the structure of a nitrided layer which is observed by an optical microscope, while FIG. 2(b) shows the state of the structure of a nitrided layer which is observed by a scan type electronic microscope.

The nitrided layer is a hard porous layer in which a large number of pores are formed due to breakdown of the compound layer and which function as oil reservoirs. Since there is a hard porous layer at the surface layer of the steel material, the lubrication effect at the surface layer of the steel material is improved and the wear resistance and durability are improved more.

By controlling the ferritic nitrocarborizing conditions and induction heating conditions, it is possible to form $5000/mm^2$ or more pores of a circle equivalent diameter of 0.1 to 1 $\mu$m which function effectively as oil reservoirs in a region of a depth of 5 $\mu$m or more from the surface.

(e) To improve the corrosion resistance at the surface of a steel part, it is effective to raise the N concentration at the surface layer part by nitriding or ferritic nitrocarborizing treatment. Furthermore, composite addition of Cr and Sn is effective.

At the recessed parts at the surface of a steel part, the N which dissolves out from the steel and the moisture in the usage environment react to form ammonium ions which deposit at relief parts on the surface of the steel part. Due to this buildup, the pH of the steel material surface rises and corrosion becomes more difficult.

Due to the synergistic effect of this and increased stability of the passivation film which is formed at the surface of the steel part due to the composite addition of Cr and Sn the higher the pH, the corrosion resistance of the surface of the steel part is improved. Note that, when compositely adding Cr and Sn, the Cr is preferably 0.05% or more and the Sn is preferably 20% or more of the Cr.

The present invention was completed based on the above discoveries and has as its gist the following:

(1) Steel for machine structural purposes for surface hardening use characterized by containing, by mass%,

C: 0.30 to 0.60%,
Si: 0.02 to 2.0%,
Mn: 0.35 to 1.5%,
Al: 0.001 to 0.5%,
Cr: 0.05 to 2.0%,
Sn: 0.001 to 1.0%,
S: 0.0001 to 0.021%,
N: 0.0030 to 0.0055%,
Ni: 0.01 to 2.0%,
Cu: 0.01 to 2.0%,
P: 0.030% or less, and
0: 0.005% or less,

having a balance of Fe and unavoidable impurities,
having contents of Sn, Cu, Ni, Mn, and S satisfying the following formulas (1) and (2);
and having contents of Sn and Cr satisfying the following formula (3);

$$-0.19 \leq 0.12 \times Sn + Cu - 0.1 \times Ni \leq 0.15 ... (1)$$

$$60 \leq Mn/S \leq 300 \ldots \quad (2)$$

$$Sn \geq 0.2 \times Cr \ldots \quad (3),$$

wherein said steel optionally further contains, by mass%, one or more of

B: 0.0003 to 0.005%,
W: 0.0025 to 0.5%,
Mo: 0.05 to 1.0%,
V: 0.05 to 1.0%,
Nb: 0.005 to 0.3%, and
Ti: 0.005 to 0.2%,

and wherein said steel optionally further contains, by mass%, one or more of

Ca: 0.0005 to 0.01%,
Mg: 0.0005 to 0.01%,
Zr: 0.0005 to 0.05%, and
Te: 0.0005 to 0.1%.

(2) A steel part for machine structural purposes which is produced by nitriding or ferritic nitrocarborizing then induction hardening steel for machine structural purposes for surface hardening use as set forth in (1), the steel part characterized in that

(a) a surface layer of a depth of 0.4 mm or more from the surface is a nitrided layer and
(b) a Vicker's hardness is 650 or more at the surface layer of a depth of 0.2 mm from the surface when treating the steel by tempering at 300°C.

(3) A steel part for machine structural purposes as set forth in (2) characterized in that at a layer inside the nitrided layer at a depth of 5 $\mu$m or more from the surface, there are 5000/mm$^2$ or more of pores of a circle equivalent diameter of 0.1 to 1 $\mu$m.

(4) A steel part for machine structural purposes as set forth in (2) or (3), characterized in that a layer which corresponds to the compound layer which is formed by nitriding or ferritic nitrocarborizing at the surface side in the nitrided layer is removed by machining.

(5) A method of production of a steel part for machine structural purposes characterized by forming steel for machine structural purposes for surface hardening use as set forth in (1) into a predetermined shape by forging or/and cutting, then treating the shaped steel member by nitriding or ferritic nitrocarborizing at 550 to 650°C for 0.5 to 5 hours, then treating it by induction heating at 900 to 1100°C for 0.05 to 5 seconds for quenching, and (a) forming a nitrided layer at a surface layer of a depth of 0.2 mm or more from the surface and (b) making a Vicker's hardness 650 or more at the surface layer of a depth of 0.2 mm from the surface when tempering at 300°C.

(6) A method of production of a steel part for machine structural purposes as set forth in (5) characterized by performing the induction hardening, then grinding away the surface layer by an amount of grinding (mm) satisfying the following formula (4):

$$0.05 \times \{1 - 0.006 \times (600 - \text{nitriding or ferritic}$$

$$\text{nitrocarborizing temperature } (°C))\} \times \{(\text{nitriding or}$$

$$\text{ferritic nitrocarborizing time } (hr) + 1)/3\} \leq \text{amount of}$$

$$\text{grinding} \leq 0.2 \text{ mm} \ldots \quad (4)$$

Advantageous Effects of Invention

According to the present invention, it is possible to provide steel for machine structural purposes for surface hardening use which is used as a material for a steel part for machine structural purposes excellent in surface fatigue strength and corrosion resistance which is provided with a high surface hardness, temper softening resistance, and machineability which cannot be obtained by a conventional soft nitrided induction hardened steel part and, furthermore, is provided with a sufficient lubrication film for the working surfaces, steel parts for machine structural purposes which are produced by that steel, and a method of production of those parts.

In particular, the steel for machine structural purposes for surface hardening use of the present invention can be applied to power transmission parts of automobiles etc., is suitable as a material for parts which require a high surface pressure fatigue strength in a corrosive environment such as gears, continuously variable transmissions, constant velocity joints, hubs, bearings, etc. and greatly contributes to the higher output and lower cost of automobiles etc.

Brief Description of Drawings

FIG. 1 shows by comparison the distribution of hardness at a cross-section from the surface in a core direction of a steel material treated by ferritic nitrocarborizing (see "dotted line" in the figure) and the distribution of hardness at a cross-section from the surface in a core direction of a steel material treated by ferritic nitrocarborizing, then induction hardening (see "solid line" in the figure).

FIG. 2 is a view which shows the state of a nitrided layer which is formed at the surface of a steel material. (a) shows the state of the structure of a nitrided layer which is observed by an optical microscope, while (b) shows the state of the structure of a nitrided layer which is observed by a scan type electronic microscope.

FIG. 3 is a view which shows a relationship between Mn/S and a thickness of a nitrogen compound layer at the time of ferritic nitrocarborizing.

FIG. 4 is a view which shows a relationship between ferritic nitrocarborizing (or nitriding) conditions and a thickness of a nitrogen compound layer.

Description of Embodiments

The steel for machine structural purposes for surface hardening use of the present invention (hereinafter sometimes referred to as "the invention steel") is used for producing steel parts for which a high surface fatigue strength is demanded even in a corrosive environment and is comprised of a steel material for steel part use to which Mn, B, Al, and N are added in suitable quantities to improve the machineability, furthermore, which is soft nitrided, then induction hardened so as to thickly form a nitrided layer with a high N concentration to improve the hardness and softening resistance, and, furthermore, has N present at the surface layer part in addition to Cr and Sn so as to improve the corrosion resistance. This is the basic idea of the invention.

Specifically, the invention steel is characterized by containing, by mass%, C: 0.30 to 0.60%, Si: 0.02 to 2.0%, Mn: 0.35 to 1.5%, Al: 0.001 to 0.5%, Cr: 0.05 to 2.0%, Sn: 0.001 to 1.0%, S: 0.0001 to 0.021%, N: 0.0030 to 0.0055%, Ni: 0.01 to 2.0%, Cu: 0.01 to 2.0%, P: 0.03% or less, and O: 0.0050% or less, having a balance of Fe and unavoidable impurities, and having contents of Sn, Cu, Ni, Mn, and S satisfying the following formulas (1) and (2) :

$$-0.19 \leq 0.12 \times Sn + Cu - 0.1 \times Ni \leq 0.15 \ldots (1)$$

$$60 \leq Mn/S \leq 300 \ldots (2)$$

Furthermore, the invention steel is characterized by having contents of the Sn and Cr satisfying the following formula (3):

$$Sn \geq 0.2 \times Cr \ldots (3)$$

First, the reasons for limitation of the composition of ingredients of the invention steel will be explained. Below, the % relating to the composition of ingredients means mass%.

C: 0.30 to 0.60%

C is important for obtaining the strength of steel. In particular, it is necessary for reducing the fraction of ferrite as the structure before induction hardening, improving the hardening ability at the time of induction hardening, and deeply forming the hardened layer.

If less than 0.30%, the ferrite fraction rises and the hardening at the time of induction hardening becomes insufficient, so the lower limit is made 0.30%. If over 0.60%, the machineability and the forgeability at the time of fabrication of parts remarkably fall and, furthermore, the possibility of quenching cracks occurring becomes larger at the time of induction hardening, so the upper limit is made 0.60%. Preferably, it is 0.34 to 0.56%.

Si: 0.02 to 2.0%

Si acts to raise the softening resistance of the quenched layer so as to improve the surface fatigue strength. To obtain the effect of addition, 0.02% or more is added. Preferably, it is 0.07% or more. If over 2.0%, the decarburization at the time of forging becomes remarkable, so 2.0% is made the upper limit. If considering the manufacturability, 1.3% or less is preferable.

Mn: 0.35 to 1.5%

Mn is effective for improving the hardenability and increasing the softening resistance to thereby improve the surface fatigue strength. Further, Mn immobilizes the S in the steel as MnS to prevent the phenomenon of obstruction of penetration by N due to the concentration of S at the steel material surface and promotes the formation of a thick compound layer due to the ferritic nitrocarborizing. Furthermore, Mn has the action of causing a drop in the fraction of ferrite in the structure before induction hardening and raising the hardening ability at the time of induction hardening.

To obtain the effect of addition, 0.35% or more is added, but to reliably immobilize S as MnS to render it harmless, an amount which satisfies $Mn/S \geq 60$ is added. Preferably, it is 0.50% or more.

If adding Mn in a large amount, the hardenability at the time of induction hardening will be improved and therefore the hardness will rise and the surface fatigue strength will be improved, but if over 1.5%, the hardness of the steel material itself will greatly rise and the machineability of the steel material before ferritic nitrocarborizing will remarkably deteriorate. As a result, the productivity will fall, so the upper limit is made 1.5%. Preferably, it is 1.2% or less.

$60 \leq Mn/S \leq 300$

Adding Mn in a certain ratio with respect to S to form MnS so as to prevent the concentration of S at the steel material surface and prevent the phenomenon of obstruction of penetration by N arising caused by the concentration of S at the steel material surface so as to thereby form a thick compound layer by ferritic nitrocarborizing is important in the present invention.

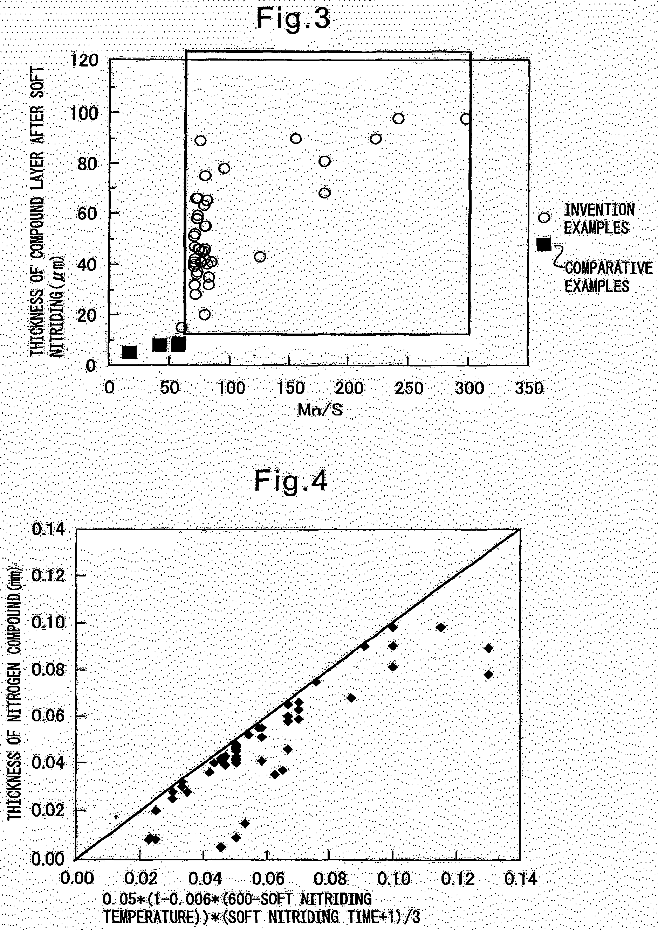

Therefore, the inventors investigated the relationship between the Mn/S and the thickness of the compound layer at the time of ferritic nitrocarborizing. The results are shown in FIG. 3.

If Mn/S is less than 60, the formation of MnS becomes insufficient and S concentrates at the steel material surface. As a result, at the time of ferritic nitrocarborizing, the penetration by N is obstructed and formation of a thickness 10 μm or more compound layer is blocked, so the lower limit is made 60. Preferably, it is 90 or more.

If Mn/S is 60 or more, preferably 90 or more, it is possible to use ferritic nitrocarborizing to form a thickness 10 μm or more compound layer and the effect of addition is remarkable, but if over 300, the effect of addition becomes substantially saturated and, further, problems arise due to the large amount of addition, so the upper limit is made 300. Preferably, it is 250 or less. If considering the machineability of the steel material, 223 or less is more preferable.

Al: 0.001 to 0.5%

Al is an element which precipitates and diffuses in the steel as nitrides and thereby refines the austenite and, furthermore, improves the hardenability to increase the thickness of the hardened layer. Further, Al forms nitrides at the time of ferritic nitrocarborizing, raises the N concentration near the surface layer, contributes to the improvement of the surface fatigue strength, and contributes to improvement of the machineability.

To obtain the effect of addition, 0.001% or more is added, but from the viewpoint of improvement of the surface fatigue strength, 0.01% or more is preferable. More preferably, it is 0.05% or more. If over 0.5%, the precipitated nitrides coarsen and the steel material becomes brittle, so the upper limit is made 0.5%. Preferably, it is 0.3% or less, more preferably, it is 0.1% or less.

Cr: 0.05 to 2.0%

Cr forms a passivation film to contribute to the improvement of the corrosion resistance and improves the nitriding characteristics and softening resistance of the quenched layer to contribute to the improvement of the surface pressure fatigue strength. Further, if Cr is present together with a suitable amount of Sn, the passivation film becomes more stable, the corrosion resistance function in a corrosive environment is strengthened, and as a result the surface fatigue strength under a corrosive environment is improved.

In a steel part which is soft nitrided, then induction hardened, the N concentration of the surface layer of the steel part increases and the pH of the sliding surfaces rises. Under a high pH environment, a Cr passivation film easily forms. Furthermore, due to the later explained addition of Sn, the Cr passivation film becomes more stable. That is, with a high N concentration environment and addition of Sn, even a small amount of Cr enables formation of a stable passivation film and improvement of the corrosion resistance.

To obtain the effect of addition, 0.05% or more is added. Preferably, it is 0.10% or more. If over 2.0%, the machineability of the steel material deteriorates, so 2.0% is made the upper limit. Preferably, it is 1.5% or less.

Sn: 0.001 to 1.0%, Sn/Cr$\geq$0.2

Sn is present together with Cr to stabilize the passivation film of Cr oxides and contribute to the improvement of the corrosion resistance of the steel material. To obtain this effect of improvement of the corrosion resistance, 0.001% or more is added. Preferably, it is 0.002% or more, More preferably, it is 0.003% or more.

If adding a large amount of Sn, the hot ductility falls and flaws occur in the casting and/or rolling at the time of production of the steel material, so the upper limit is made 1.0%. The point where the formation of flaws is certain is preferably 0.3% or less, more preferably 0.1% or less.

N dissolved out from the steel material and ammonium ions from the moisture in the usage environment are produced and deposit at the relief shapes at the surface of a steel part to thereby make the pH of the surface rise and make corrosion difficult, and the passivation film which is formed on the surface of the steel part stabilizes the higher the pH, so the corrosion resistance is improved by this synergy.

The corrosion resistance of the steel material is improved with a small addition of Cr and Sn, but if adding an amount of S which satisfies Sn/Cr$\geq$0.2 to the amount of Cr, it is possible to form a stable passivation film with a smaller amount of Cr.

Note that, Sn is an element which, like Cu, lowers the hot ductility, so to secure the hot ductility of the steel material, it is necessary that the elements improving the hot ductility, including Ni, satisfy the following formula (1). This point will be explained later.

$$-0.19\leq 0.12\times Sn+Cu-0.1\times Ni\leq 0.15... \quad (1)$$

Ni: 0.01 to 2.0%

Ni contributes to improve the toughness. To obtain the effect of improvement of the toughness, 0.01% or more is added. Preferably, it is 0.07% or more. If over 2.0%, the machineability of the steel material deteriorates, so 2.0% is made the upper limit. Preferably, it is 1.6% or less. Further, Ni improves the hot ductility, so the above formula (1) must be satisfied.

Cu: 0.01 to 2.0%

Cu strengthens the ferrite to raise the hardenability and, furthermore, raise the corrosion resistance. If less than 0.01%, the effect of addition does not appear, so the lower limit is made 0.01%. Preferably, it is 0.08% or more.

If over 2.0%, the improvement of the mechanical properties becomes saturated, so the upper limit is made 2.0%. Preferably, it is 1.6% or less. Further, Cu is an element which lowers the hot ductility in the same way as Sn, so the above formula (1) must be satisfied.

Sn is an element which raises the corrosion resistance while lowering the hot workability. Cu, in the same way as Sn, is an element which causes a drop in the hot workability. On the other hand, Ni is an element which raises the hot workability.

In the invention steels which simultaneously contain Sn, Cu, and Ni, to maintain the required hot workability, prevent cracks and flaws at the production, continuous casting, hot rolling, and hot forging of the steel material, and to secure productivity, it is important to suitably balance the amount of Sn, the amount of Cu, and the amount of Ni.

That is, the above formula (1) is a relationship of composition which means securing the necessary hot workability under a suitable balance of the amount of Sn, the amount of Cu, and the amount of Ni.

Note that, the coefficient of Sn (0.12) is a coefficient which determines the extent of inhibition of hot ductility compared with Cu, while the coefficient of Ni (0.1) is a coefficient which determines, by experience, the extent of improvement of the hot ductility.

In the above formula (1), the lower limit is determined by the smallest values of Sn and Cu and the largest value of Ni, but the upper limit was set to 0.15 from the viewpoint of maintaining the hot workability necessary for securing the productivity. The above formula (1) will be explained in detail below.

Sn is an element which becomes a cause of cracks and flaws at the time of hot temperature working. If Sn and Cu are copresent, the high temperature ductility remarkably falls whereby cracks and flaws occur at the time of high temperature working and inferior parts result. That is, if trying to improve the corrosion resistance by the addition of Sn, the manufacturability of the steel material is sometimes impaired.

For this reason, in the actual process of production of a steel material, the occurrence of cracks and flaws becomes a problem in the step of the blooming the cast slab.

The hot workability of a cast slab which contains Sn is inferior to the hot workability of a general cast slab, so in the present invention, the most severe blooming is simulated to evaluate the hot workability. The upper limit of the relationship of composition having the amounts of Sn, Cu, and N as variables is determined to prevent cracks at the time of bar rolling and flaws after rolling.

The tested steels contained, by mass%, C: 0.28 to 0.63%, Si: 0.01 to 2.10%, Mn: 0.30 to 2.10%, Al: 0.010 to 5.50%, Cr: 0.10 to 2.50%, S: 0.005 to 0.022%, N: 0.0031 to 0.0060%, and B: 0.0001 to 0.0052% as a basic composition and had 1.05% or less of Sn, 1.50% or less of Cu, and 2.10% or less of Ni added in various combinations. These were melted by vacuum melting and cast into 15 kg ingots to evaluate the hot rolling characteristics.

From the ingots, a test material of a cross-section of 80 mm square was cut out from the steel material and a thermocouple was attached to the center part. The test material was loaded into a 1050°C electric furnace. When the center part of the test material reached 1045°C, the material was taken out after 30 minutes and the test material was rolled when the surface temperature reached 1000°C.

The hot rolling was performed for three continuous passes to successively reduce the plate thickness of 80 mm to 64 mm, 51 mm, and 41 mm, then the material was air-cooled to room temperature.

When the test material cracked in the rolling, the test was suspended at the point of time of cracking. A test material which did not crack was cooled, then a cross-section of the test material was cut out and observed for surface flaws. In the judgment of surface flaws, materials with flaws of less than a depth of 100 $\mu$m were evaluated as "flawless" while ones with flaws of over 100 $\mu$m were evaluated as "flawed".

From the result of the above observation, it was learned that if the value of "0.12×Sn+Cu-0.1×Ni" exceeds 0.15, cracks and flaws occur in the process of production of the steel material or process of production of a steel part.

That is, in the invention steels, if setting the amounts of Sn, Cu, and Ni to be in the individual ranges of composition and satisfy 0.12×Sn+Cu-0.1×Ni≤0.15, it is possible to prevent cracks and flaws in the process of production of steel materials or the process of production of steel parts.

S: 0.0001 to 0.021%

S is an element which improves the machineability, but on the other hand concentrates at the steel material surface and prevents penetration of N into the steel material at the time of ferritic nitrocarborizing and inhibits ferritic nitrocarborizing. While added to improve the machineability, if over 0.021%, the extent of inhibition of ferritic nitrocarborizing becomes remarkable and, furthermore, the forgeability deteriorates, so the upper limit is made 0.021%.

Preferably, it is 0.015% or less. The lower limit is made the industrial limit of 0.0001%. Preferably, it is 0.001% or more. Further, S more preferably satisfies Mn/S≥70 to be immobilized as MnS and rendered harmless.

N: 0.0030 to 0.0055%

N forms various types of nitrides and refines the austenite structure at the time of induction quenching. To obtaining this refining effect, 0.0030% or more is added. Preferably, it is 0.0035% or more.

If adding a large amount of N, the hardness rises and, further, AlN is produced and the solute Al which is effective for improvement of the machineability is decreased, so the machineability deteriorates. Further, the ductility in the high temperature region falls, coarse AlN and coarse BN are produced, the steel material becomes remarkably brittle, and cracks form at the time of rolling and forging.

For this reason, the upper limit is made 0.0055%. Preferably, it is 0.0050% or less.

P: 0.030% or less

P is an impurity element which is unavoidably mixed in. It segregates at the grain boundaries and causes a drop in the toughness. For this reason, it has to be reduced as much as possible and is made 0.030% or less. Preferably, it is 0.015% or less.

The lower limit is not particularly set, but reduction to less than 0.0001% is difficult industrially, so unavoidably 0.0001% or more is included.

O: 0.005% or less

O is an element which is unavoidably present as $Al_2O_3$, $SiO_2$, and other oxide-based inclusions. If the amount of O is large, the above oxides become larger in size and function as starting points for breakage of power transmission parts, so the amount is made 0.005% or less. Preferably, it is 0.002% or less. If aiming at a higher lifetime, 0.001% or less is preferable.

The lower limit is not particularly set, but reduction to less than 0.0001% is difficult industrially, so unavoidably 0.0001% or more is contained.

Next, the reasons for limitation of the composition of the selective ingredients of the invention steels will be explained.

[Steel Strengthening Elements]

B: 0.0003 to 0.005%

B bonds with the N in the steel and is present as BN at the time of working the steel material so as to contribute to the improvement of the machineability. Further, B forms BN during cooling with a slow cooling speed, so acts to prevent the steel material from hardening. Furthermore, at the time of induction heating performed after working the steel material, the BN breaks down whereby B is produced and the hardenability is greatly improved so the surface fatigue strength is improved.

To obtain the effect of addition, 0.0003% or more is added. Preferably, it is 0.0008% or more. If over 0.005%, the effect of addition becomes saturated. Furthermore, it becomes a cause of cracks at the time of rolling or forging, so 0.005% is made the upper limit. Preferably, it is 0.004% or less.

W: 0.0025 to 0.5%

W raises the hardenability and contributes to the improvement of the surface fatigue characteristics, but on the other hand raises the hardness to degrade the machineability. For this reason, the amount of addition of W is limited. To obtain the effect of addition, 0.0025% or more is added, but to achieve a large improvement in the surface fatigue strength, 0.01% or more is added. Preferably, it is 0.03% or more. If over 0.5%, the effect of addition is saturated and the machineability deteriorates, so 0.5% is made the upper limit. Preferably, it is 0.2% or less.

Mo: 0.05 to 1.0%

Mo raises the softening resistance of the quenched layer to contribute to improvement of the surface pressure fatigue strength, further, makes the quenched layer tougher, and contributes to an improvement of the bending fatigue strength. To obtain the effect of addition, 0.05% or more is added. Preferably, it is 0.10% or more. If over 1.0%, the effect of addition becomes saturated, so 1.0% is made the upper limit. Preferably, it is 0.7% or less.

V: 0.05 to 1.0%

V precipitates and disperses as nitrides in the steel material and contributes to the refinement of the austenite structure at the time of induction hardening.

To obtain the effect of addition, 0.05% or more is added. Preferably, it is 0.10% or more. If over 1.0%, the effect of addition becomes saturated, so the upper limit is made 1.0%. Preferably, it is 0.7% or less.

Nb: 0.005 to 0.3%

Nb precipitates and disperses as nitrides in the steel material and contributes to the refinement of the austenite structure at the time of induction hardening. To obtain the effect of addition, 0.005% or more is added. Preferably, it is 0.010% or more. If over 0.3%, the effect of addition becomes saturated, so the upper limit is made 0.3%. Preferably, it is 0.1% or less.

Ti: 0.005 to 0.2%

Ti precipitates and disperses as nitrides in the steel material and contributes to the refinement of the austenite structure at the time of induction hardening. To obtain the effect of addition, 0.005% or more is added. Preferably, it is 0.010% or more. If over 0.2%, the precipitates coarsen and the steel material is embrittled, so the upper limit is made 0.2%. Preferably, it is 0.1% or less.

[Elements Improving Bending Strength]

In steel parts, when improvement of the bending fatigue strength is sought, one or more of Ca: 0.0005 to 0.01%, Mg: 0.0005 to 0.01%, Zr: 0.0005 to 0.05%, and Te: 0.0005 to 0.1% is added.

These elements all suppress stretching of MnS to make the bending fatigue strength higher and prevent bending fatigue fracture of gears and fatigue fracture of spline bases of shaft parts.

To obtain an effect of suppression of stretching of MnS, Ca, Mg, Zr, and Te are added in 0.0005% or more. Preferably, these elements are 0.0010% or more.

Even if added in large amounts, the effect of addition becomes saturated, so the upper limit is made 0.01% for Ca and Mg, 0.05% for Zr, and 0.1% for Te. Preferably, the limit is 0.005% or less for Ca and Mg, 0.01% or less for Zr, and 0.05% or less for Te.

Further, the invention steel may contain Pb, Bi, Zn, REM, Sb, etc. in ranges not impairing ira properties in addition to the above ingredients.

Next, the thickness and hardness of the nitrided layer of steel parts for machine structural purposes of the present invention (hereinafter sometimes referred to as "the invention steel parts") will be explained.

The invention steel parts are steel parts obtained by nitriding or ferritic nitrocarborizing, then induction hardening the invention steel and (a) have a surface layer of a depth of 0.4 mm or more from the surface comprised of a nitrided layer and (b) have a Vicker's hardness of 650 or more at the surface layer of a depth of 0.2 mm from the surface when tempering at 300°C.

When grinding the surface layer of the steel part for use, the nitrogen compound layer which is produced by the nitriding or ferritic nitrocarborizing is not completely removed. To leave an N-containing layer which contributes to securing the surface hardness and improving the corrosion resistance at the surface layer of the steel part, the surface layer of a depth of 0.4 mm or more from the surface is made a nitrided layer.

If the thickness of the nitrided layer is insufficient, the thickness of the surface layer having the sufficient hardness will be thin, spalling of internal fracture will occur before fracture at the surface starting point, the lifetime will become shorter, and, further, the effect of improvement of the corrosion resistance will not be exhibited.

Surface fatigue fracture is fracture at a surface starting point at a working surface made high in temperature (300°C or so), so it is possible to raise the surface fatigue strength to prevent surface fatigue fracture. For improvement of the surface fatigue strength, maintaining a high temperature strength, that is, increasing the tempering softening resistance, is effective. For this reason, the Vicker's hardness is made 650 or more at the surface layer of a depth of up to 0.2 mm from the surface of the steel part at the time of tempering at 300°C.

If the Vicker's hardness is less than 650 at the surface layer of a depth of up to 0.2 mm from the surface of the steel part at the time of tempering at 300°C, a high surface pressure cannot be withstood.

In actual steel parts, the fact of being a steel part which was soft nitrided, then induction hardened can be discerned by taking a microsample from the steel part, corroding it by a Nital corrosive solution, then observing the structure under an optical microscope and making a judgment by that structure, the distribution of hardness from the surface to the core part, and, furthermore, the distribution of N from the surface to the core part which was measured by EPMA.

Next, the structure of the surface layer of the invention steel parts will be explained.

The invention steel parts are steel parts which are nitrided or soft nitrided, then induction hardened which have 5000/mm$^2$ or more pores with a circle equivalent diameter of 0.1 to 1 $\mu$m present in a layer of a depth of 5 $\mu$m or more from the surface.

In steel parts (gears) which fracture due to surface fatigue due to rolling, the lubrication of the working surfaces is important. If the lubrication at the working surfaces is insufficient, seizing and sticking will occur at contact of the steel materials with each other and the surface fatigue strength will fall.

To secure a sufficient lubrication film at the working surfaces, it is effective to provide oil reservoirs so that a film of a lubricant is formed continuously at the working surfaces.

The invention steel parts are characterized by forming at the surface layer of the steel material a compound layer mainly comprised of $Fe_3N$, $Fe_4N$, and other Fe nitrides by ferritic nitrocarborizing, then using induction hardening to transform the structure to austenite and quench the steel to form a nitrided layer.

The nitrided layer is formed by the N which is produced by breakdown of the compound layer which was formed at the time of ferritic nitrocarborizing and by the N which permeates by diffusion in the steel material at the time of ferritic nitrocarborizing. At this time, the compound layer becomes a hard porous layer with a large number of pores present dispersed in it after induction hardening.

The pores function as oil reservoirs to improve the lubrication effect and further improve the wear resistance and durability.

If 5000/$mm^2$ or more pores of a circle equivalent diameter of 0.1 to 1 $\mu$m are present in a layer at a depth of 5 $\mu$m or more from the surface, the pores will effectively function as oil reservoirs. To form pores which effectively function as oil reservoirs, it is necessary to control the ferritic nitrocarborizing conditions and/or induction heating conditions.

Even with just ferritic nitrocarborizing, pores can be formed in the compound layer and the pores function as oil reservoirs, but the compound layer would be extremely brittle and could not withstand a large load, so the surface fatigue strength is not improved.

If the pores become coarse, they become starting points for pitching and other surface fatigue and result in a drop of the surface fatigue strength, so the circle equivalent diameter of the pores was made 1 $\mu$m or less. If the pores are too small in circle equivalent diameter, they will not sufficiently function as oil reservoirs, so the lower limit of the circle equivalent diameter was made 0.1 $\mu$m.

If the number of pores is too small, they will not effectively function overall as oil reservoirs, so 5000/$mm^2$ or more have to be present in a layer of a depth of 5 $\mu$m or more from the surface of the steel part.

During the period until the lifetime is reached under normal operation, the gear surfaces and other sliding surfaces normally become worn by 5 $\mu$m or more, so to extend the lifetime of a steel part, there must be 5000/$mm^2$ or more pores of a circle equivalent diameter 0.1 to 1 $\mu$m present at a layer of a depth of 5 $\mu$m or more from the surface of the steel part.

The size and number of pores depends on the ferritic nitrocarborizing conditions and/or induction heating conditions. To form an effectively functioning porous layer, it is necessary to select ferritic nitrocarborizing conditions and/or induction hardening conditions which give a high surface fatigue strength.

It is preferable to perform nitriding or ferritic nitrocarborizing at 550 to 650°C for 0.5 to 5 hours, then perform induction heating at 900 to 1100°C for 0.05 to 5 seconds.

In the invention steel parts, the surface layer is martensite, but the core part has to be left as ferrite-pearlite.

If quenching only the surface layer to transform it to martensite, compressive stress will remain at the surface layer and the surface fatigue strength will rise. If transforming even the core part to martensite, the compressive stress which remains at the surface layer will decrease and the surface fatigue strength will fall.

In the invention steel parts, it is preferable to machine away the layer in the nitrided layer which corresponds to the nitrogen compound layer.

The location where a nitrogen compound layer is formed at the time of nitriding or ferritic nitrocarborizing becomes martensite including pores by the subsequent induction hardening, but the layer inside from the nitrogen compound layer (hereinafter referred to as the "nitrogen diffusion layer") becomes martensite without pores. The two structures differ in the point of hardness.

In the invention steel parts, after heat treatment, sometimes the parts are ground to relieve stress, but if this grinding is insufficient, the martensite of the nitrogen compound layer and the martensite of the nitrogen diffusion layer will appear at the surface in a mixed manner after grinding and the surface hardness will become uneven.

Therefore, when grinding the surface of invention steel parts for use, to eliminate unevenness of surface hardness, it is necessary to secure an amount of grinding of at least the thickness of the nitrogen compound layer.

The amount of grinding for removing the nitrogen compound layer will be explained. The thickness of the nitrogen compound layer depends on the temperature and/or time of nitriding or ferritic nitrocarborizing. Therefore, the relationship between the temperature and/or time of nitriding or ferritic nitrocarborizing and the thickness of the nitrogen compound layer which is measured after nitriding or ferritic nitrocarborizing was investigated. The results are shown in FIG. 4.

The abscissa shows the 0.05×{1-0.006×(600-nitriding or ferritic nitrocarborizing temperature (°C))}×{(nitriding or ferritic nitrocarborizing time (hr)+1)/3} based on the results of investigation of the effects of temperature (°C) and time (hr) in nitriding or ferritic nitrocarborizing.

As shown in FIG. 4, a relationship of the thickness of the nitrogen compound layer (mm)=0.05×{1-0.006×(600-nitriding or ferritic nitrocarborizing temperature (°C))}×{(nitriding or ferritic nitrocarborizing time (hr)+1)/3} was obtained.

For this reason, in removing by grinding a layer of the surface of a steel part, it is sufficient to secure an amount of removal by grinding of the thickness (mm) found by the above relationship or more. Further, the upper limit of the amount of removal by grinding was made the 0.2 mm at which the effect of addition of N to the steel material by nitriding or ferritic nitrocarborizing can be obtained.

Therefore, the amount of grinding for removing the nitrogen compound layer preferably satisfies the following formula (4):

$$0.05 \times \{1-0.006 \times (600-\text{nitriding or ferritic nitrocarborizing temperature (°C))}\} \times \{(\text{nitriding or ferritic nitrocarborizing time (hr)}+1)/3\} \leq \text{amount of removal by grinding (mm)} \leq 0.2\text{mm} \ldots (4)$$

Next, the method of production of the invention steel parts will be explained.

The invention steel parts are produced by forming the invention steel into a predetermined shape by forging and/or cutting and then nitriding or ferritic nitrocarborizing the formed steel member.

To form a nitrided layer with a high N concentration to obtain a high surface fatigue strength, a compound layer which breaks down and becomes a source of supply of N at the time of induction heating (a layer mainly comprised of $Fe_3N$, $Fe_4N$, and other Fe nitrides) is formed on the steel surface by ferritic nitrocarborizing.

To cause a sufficient amount of N to diffuse into the steel material to thickly form a nitrided layer which is hard and has a high tempering softening resistance, it is necessary to make the thickness of the compound layer after ferritic nitrocarborizing 10 $\mu$m or more.

If the ferritic nitrocarborizing temperature is a high temperature, the compound layer becomes thin and, furthermore, the N concentration in the compound layer becomes lower, so the ferritic nitrocarborizing temperature is made 650°C or less. If the ferritic nitrocarborizing temperature is 650°C or less, it is possible to prevent heat treatment distortion of the steel material, grain boundary oxidation, etc. Preferably, it is 620°C or less.

To form a thick compound layer, the lower limit of the ferritic nitrocarborizing temperature is made 550°C. Preferably, it is 580°C or more.

The thickness of the nitrided layer becomes greater along with the ferritic nitrocarborizing time, so the ferritic nitrocarborizing time has to be at least 0.5 hour. If over 5 hours, the saturation point is reached in the increase of thickness of the nitrided layer, so the ferritic nitrocarborizing time is made 5 hours or less. Preferably, it is 1 to 4 hours.

The cooling after the ferritic nitrocarborizing is performed by air-cooling, $N_2$ gas cooling, oil cooling, and other methods. For the ferritic nitrocarborizing, gas ferritic nitrocarborizing or salt bath ferritic nitrocarborizing can be used. The method of supplying nitrogen to the steel material surface and forming a 10 $\mu$m or more compound layer at the surface layer of the steel material may be either of ferritic nitrocarborizing or nitriding.

The nitriding in the present invention is not a method like ferritic nitrocarborizing of treatment by a mixed atmosphere of $NH_3$ and $CO_2$ (in some cases, including $N_2$ as well), but is a method which is industrially differentiated from it as a surface hardening method which uses only $NH_3$ for long treatment.

To break down the compound layer which was formed by the ferritic nitrocarborizing at the surface layer of the steel material and make the produced N diffuse into the steel material so as to form a nitrided layer with a high N concentration in the layer at a region of a depth of 0.4 mm or more from the surface obtain a high hardness of a Vicker's hardness of 650 or more at the layer of a depth of 0.2 mm from the surface by tempering at 300°C, after the ferritic nitrocarborizing, it is necessary to use induction heating to transform the structure to austenite and perform quenching.

Regarding the heating at the time of induction hardening, the breakdown and formation of a solid solution by the nitrogen compound layer have to be considered. To secure a state of a single phase of austenite and the nitrogen compound layer forming a solid solution, the heating temperature has to be made 900 to 1100°C and the holding time has to be made 0.05 to 5 seconds.

If the heating temperature is less than 900°C, the breakdown and formation of a solid solution by the nitrogen compound become insufficient and the required hardness can no longer be secured. If the heating temperature exceeds 1100°C, the N diffuses up to the inside, the concentration of N at the surface becomes less than 0.5%, a Vicker's hardness of 650 or more at the time of tempering at 300°C cannot be secured, and, furthermore, due to the increase in the oxide layer, the mechanical properties deteriorate.

If the holding time is shorter than 0.05 second, the breakdown of the compound layer and the diffusion of the produced N become insufficient, while if over 5 seconds, the N diffuses up to the inside, the concentration of N at the surface becomes less than 0.5%, and a Vicker's hardness of 650 or more at the time of tempering at 300°C cannot be secured.

The frequency of the high frequency is around 400 kHz for small sized steel parts and 5 kHz or so for large sized steel parts. The coolant which is used for the quenching is preferably water, a polymer quenching agent, or other water-based coolant with a large cooling ability.

After induction hardening, the steel part is preferably tempered at a low temperature of around 150°C in the same way as a general carburized quenched part so as secure toughness.

Examples

Next, examples of the present invention will be explained, but the conditions in the examples are illustrations of the conditions which were employed for confirming the workability and effects of the present invention. The present invention is not limited to these conditions. The present invention can employ various conditions so long as not departing from the gist of the present invention and achieving the object of the present invention.

(Example 1)

Steel materials of the compositions of ingredients which are shown in Table 1 and Table 2 (continuation of Table 1) (invention examples) and in Table 3 (comparative examples) were produced.

Table 1

| Ex. | Steel no. | Class | Composition of ingredients (mass%) | | | | | | | | | | | | |
|---|---|---|---|---|---|---|---|---|---|---|---|---|---|---|---|
| | | | C | Si | Mn | P | S | Al | Cr | Sn | O | Ni | Cu | N | B |
| 1 | a | Inv. ex. | 0.35 | 0.25 | 0.88 | 0.014 | 0.007 | 0.120 | 0.10 | 0.07 | 0.001 | 0.01 | 0.01 | 0.0040 | |
| 2 | b | Inv. ex. | 0.54 | 0.20 | 0.79 | 0.015 | 0.010 | 0.030 | 0.11 | 0.10 | 0.001 | 0.01 | 0.01 | 0.0039 | |
| 3 | C | Inv. ex. | 0.57 | 1.35 | 0.81 | 0.015 | 0.011 | 0.027 | 0.70 | 0.15 | 0.002 | 0.01 | 0.02 | 0.0046 | |
| 4 | d | Inv. ex. | 0.60 | 1.96 | 0.36 | 0.014 | 0.005 | 0.035 | 0.12 | 0.03 | 0.001 | 0.01 | 0.01 | 0.0049 | 0.0003 |
| 5 | e | Inv. ex. | 0.31 | 0.25 | 0.86 | 0.009 | 0.009 | 0.069 | 1.20 | 0.25 | 0.004 | 0.02 | 0.01 | 0.0042 | |
| 6 | f | Inv. ex. | 0.55 | 0.05 | 1.45 | 0.015 | 0.006 | 0.200 | 0.10 | 0.03 | 0.003 | 0.01 | 0.03 | 0.0050 | |
| 7 | g | Inv. ex. | 0.40 | 0.25 | 0.68 | 0.002 | 0.009 | 0.126 | 1.85 | 0.40 | 0.002 | 0.01 | 0.03 | 0.0045 | 0.0010 |
| 8 | h | Inv. ex. | 0.55 | 0.05 | 1.49 | 0.012 | 0.021 | 0.300 | 0.10 | 0.04 | 0.001 | 0.01 | 0.02 | 0.0046 | 0.0025 |
| 9 | i | Inv. ex. | 0.55 | 0.25 | 0.81 | 0.015 | 0.011 | 0.030 | 0.10 | 0.05 | 0.002 | 0.01 | 0.01 | 0.0041 | 0.0004 |
| 10 | j | Inv. ex. | 0.53 | 0.25 | 0.75 | 0.014 | 0.009 | 0.020 | 0.15 | 0.04 | 0.004 | 0.01 | 0.02 | 0.0034 | |
| 11 | k | Inv. ex. | 0.55 | 0.20 | 0.88 | 0.015 | 0.012 | 0.030 | 0.12 | 0.04 | 0.003 | 0.02 | 0.02 | 0.0031 | 0.0004 |
| 12 | l | Inv. ex. | 0.55 | 0.35 | 0.72 | 0.014 | 0.010 | 0.020 | 0.15 | 0.05 | 0.003 | 0.01 | 0.01 | 0.0055 | 0.0003 |
| 13 | m | Inv. ex. | 0.45 | 0.25 | 0.90 | 0.015 | 0.011 | 0.192 | 0.13 | 0.05 | 0.002 | 0.01 | 0.03 | 0.0055 | 0.0007 |
| 14 | n | Inv. ex. | 0.56 | 0.20 | 0.86 | 0.014 | 0.011 | 0.040 | 0.15 | 0.04 | 0.002 | 0.02 | 0.01 | 0.0046 | 0.0003 |
| 15 | o | Inv. ex. | 0.49 | 0.27 | 0.85 | 0.015 | 0.011 | 0.040 | 0.18 | 0.05 | 0.003 | 0.02 | 0.01 | 0.0046 | 0.0006 |
| 16 | p | Inv. ex. | 0.55 | 0.34 | 1.49 | 0.015 | 0.005 | 0.099 | 1.13 | 0.24 | 0.001 | 0.02 | 0.02 | 0.0044 | 0.0009 |
| 17 | q | Inv. ex. | 0.60 | 0.20 | 0.88 | 0.014 | 0.011 | 0.050 | 0.13 | 0.05 | 0.002 | 0.02 | 0.01 | 0.0045 | 0.0003 |
| 18 | r | Inv. ex. | 0.56 | 0.31 | 0.80 | 0.013 | 0.010 | 0.200 | 0.15 | 0.04 | 0.002 | 1.90 | 0.33 | 0.0050 | 0.0003 |
| 19 | s | Inv. ex. | 0.45 | 0.25 | 0.88 | 0.015 | 0.012 | 0.010 | 0.18 | 0.04 | 0.004 | 0.01 | 0.01 | 0.0049 | 0.0005 |
| 20 | t | Inv. ex. | 0.57 | 0.10 | 0.90 | 0.013 | 0.012 | 0.031 | 1.00 | 0.25 | 0.003 | 0.01 | 0.15 | 0.0039 | 0.0003 |
| 21 | u | Inv. ex. | 0.60 | 0.25 | 0.80 | 0.015 | 0.010 | 0.025 | 0.11 | 0.05 | 0.004 | 0.06 | 0.01 | 0.0051 | |
| 22 | v | Inv. ex. | 0.56 | 0.10 | 0.90 | 0.015 | 0.005 | 0.031 | 1.00 | 0.25 | 0.003 | 1.40 | 0.25 | 0.0039 | 0.0012 |
| 23 | w | Inv. ex. | 0.55 | 0.25 | 0.69 | 0.013 | 0.009 | 0.010 | 0.11 | 0.05 | 0.004 | 0.55 | 0.20 | 0.0051 | 0.0010 |
| 24 | x | Inv. ex. | 0.53 | 0.25 | 0.92 | 0.014 | 0.013 | 0.031 | 0.15 | 0.06 | 0.003 | 0.01 | 0.01 | 0.0045 | |

| Ex. | Steel no. | Class | Composition of ingredients (mass%) | | | | | | | | | | | | |
|---|---|---|---|---|---|---|---|---|---|---|---|---|---|---|---|
| | | | C | Si | Mn | P | S | Al | Cr | Sn | O | Ni | Cu | N | B |
| 25 | y | Inv. ex. | 0.56 | 0.20 | 0.81 | 0.013 | 0.011 | 0.050 | 0.11 | 0.30 | 0.004 | 0.01 | 0.02 | 0.0052 | 0.0010 |
| 26 | z | Inv. ex. | 0.55 | 0.25 | 0.95 | 0.013 | 0.012 | 0.050 | 0.01 | 0.05 | 0.003 | 0.02 | 0.02 | 0.0049 | 0.0003 |
| 27 | aa | Inv. ex. | 0.55 | 0.20 | 0.96 | 0.014 | 0.013 | 0.045 | 0.11 | 0.05 | 0.003 | 0.01 | 0.03 | 0.0046 | |
| 28 | ab | Inv. ex. | 0.55 | 0.25 | 0.93 | 0.015 | 0.012 | 0.035 | 0.15 | 0.06 | 0.003 | 0.03 | 0.02 | 0.0049 | 0.0003 |
| 29 | ac | Inv. ex. | 0.53 | 0.25 | 0.78 | 0.014 | 0.005 | 0.040 | 0.12 | 0.05 | 0.003 | 0.01 | 0.02 | 0.0053 | 0.0003 |
| 30 | ad | Inv. ex. | 0.51 | 0.20 | 0.89 | 0.013 | 0.004 | 0.030 | 0.11 | 0.04 | 0.003 | 0.01 | 0.02 | 0.0051 | 0.0010 |
| 31 | ae | Inv. ex. | 0.55 | 0.25 | 0.85 | 0.015 | 0.010 | 0.035 | 0.15 | 0.06 | 0.004 | 0.01 | 0.03 | 0.0054 | 0.0003 |
| 32 | af | Inv. ex. | 0.50 | 1.30 | 0.36 | 0.015 | 0.005 | 0.041 | 0.15 | 0.05 | 0.003 | 0.01 | 0.03 | 0.0038 | 0.0020 |
| 33 | ag | Inv. ex. | 0.53 | 0.25 | 0.89 | 0.015 | 0.012 | 0.123 | 0.10 | 0.05 | 0.003 | 1.50 | 0.28 | 0.0046 | |
| 34 | ah | Inv. ex. | 0.56 | 0.23 | 0.79 | 0.014 | 0.011 | 0.102 | 0.11 | 0.06 | 0.002 | 0.01 | 0.03 | 0.0046 | |
| 35 | ai | Inv. ex. | 0.55 | 0.21 | 0.81 | 0.014 | 0.010 | 0.050 | 0.12 | 0.05 | 0.004 | 0.03 | 0.02 | 0.0041 | 0.0010 |
| 36 | ak | Inv. ex. | 0.53 | 0.05 | 1.45 | 0.015 | 0.020 | 0.050 | 0.15 | 0.06 | 0.003 | 0.01 | 0.02 | 0.0051 | 0.0003 |
| 37 | al | Inv. ex. | 0.55 | 0.25 | 0.80 | 0.013 | 0.010 | 0.120 | 0.10 | 0.05 | 0.002 | 0.02 | 0.02 | 0.0043 | 0.0010 |
| 38 | am | Inv. ex. | 0.53 | 0.20 | 0.80 | 0.015 | 0.011 | 0.023 | 0.15 | 0.06 | 0.003 | 0.80 | 0.20 | 0.0045 | 0.0009 |
| 39 | an | Inv. ex. | 0.56 | 0.35 | 0.85 | 0.014 | 0.012 | 0.020 | 0.15 | 0.06 | 0.003 | 0.02 | 0.02 | 0.0052 | |
| 40 | ao | Inv. ex. | 0.55 | 0.53 | 0.50 | 0.015 | 0.007 | 0.034 | 0.16 | 0.06 | 0.002 | 0.10 | 0.10 | 0.0048 | |
| 41 | ap | Inv. ex. | 0.53 | 0.05 | 0.40 | 0.015 | 0.005 | 0.49 | 0.11 | 0.06 | 0.002 | 0.25 | 0.11 | 0.0051 | |
| 42 | aq | Inv. ex. | 0.30 | 1.95 | 0.90 | 0.014 | 0.005 | 0.027 | 0.50 | 0.15 | 0.003 | 0.30 | 0.15 | 0.0040 | 0.0010 |
| 43 | ar | Inv. ex. | 0.53 | 0.20 | 0.83 | 0.009 | 0.010 | 0.020 | 0.05 | 0.01 | 0.003 | 0.01 | 0.01 | 0.0051 | 0.0010 |
| 44 | as | Inv. ex. | 0.55 | 0.25 | 0.79 | 0.011 | 0.013 | 0.030 | 0.10 | 0.003 | 0.004 | 0.03 | 0.03 | 0.0046 | 0.0015 |
| 45 | at | Inv. ex. | 0.53 | 0.30 | 0.85 | 0.009 | 0.008 | 0.020 | 0.11 | 0.002 | 0.005 | 0.01 | 0.02 | 0.0039 | 0.0010 |
| 46 | au | Inv. ex. | 0.55 | 0.26 | 0.82 | 0.010 | 0.006 | 0.010 | 0.13 | 0.001 | 0.005 | 0.01 | 0.01 | 0.0035 | |

EP 2 634 279 B1

Table 2 (continuation of Table 1)

| Ex. | Steel no. | Class | Composition of ingredients (mass%) | | | | | | | | | Mn/S | Sn/Cr | 0.12*Sn+ Cu-0.1*Ni |
|---|---|---|---|---|---|---|---|---|---|---|---|---|---|---|
| | | | W | Mo | V | Nb | Ti | Ca | Mg | Zr | Te | | | |
| 1 | a | Inv. ex. | | | | | | | | | | 126 | 0.70 | 0.02 |
| 2 | b | Inv. ex. | | | | | | | | | | 79 | 0.91 | 0.02 |
| 3 | C | Inv. ex. | | | | | | | | | | 74 | 0.21 | 0.04 |
| 4 | d | Inv. ex. | | | | | | | | | | 72 | 0.25 | 0.01 |
| 5 | e | Inv. ex. | | | | | | | | | | 96 | 0.21 | 0.04 |
| 6 | f | Inv. ex. | | | | | | | | | | 242 | 0.30 | 0.03 |
| 7 | g | Inv. ex. | | | | | | | | | | 76 | 0.22 | 0.08 |
| 8 | h | Inv. ex. | | | | | 0.02 | | | | | 71 | 0.40 | 0.02 |
| 9 | i | Inv. ex. | 0.45 | | | | | | | | | 74 | 0.50 | 0.02 |
| 10 | j | Inv. ex. | | 0.50 | | | | | | | | 83 | 0.27 | 0.02 |
| 11 | k | Inv. ex. | | | 0.55 | | | | | | | 73 | 0.33 | 0.02 |
| 12 | l | Inv. ex. | | | | 0.06 | | | | | | 72 | 0.33 | 0.02 |
| 13 | m | Inv. ex. | | | | | 0.17 | | | | | 82 | 0.38 | 0.04 |
| 14 | n | Inv. ex. | | 0.06 | 0.09 | | 0.05 | | | | | 80 | 0.27 | 0.01 |
| 15 | o | Inv. ex. | 0.003 | | 0.50 | 0.005 | | | | | | 77 | 0.28 | 0.01 |
| 16 | p | Inv. ex. | | | | 0.26 | 0.006 | | | | | 298 | 0.21 | 0.05 |
| 17 | q | Inv. ex. | | 0.10 | 0.06 | | | | | | | 80 | 0.38 | 0.01 |
| 18 | r | Inv. ex. | | | | | | | | | | 80 | 0.27 | 0.14 |
| 19 | s | Inv. ex. | | | | | | | | | | 73 | 0.22 | 0.01 |
| 20 | t | Inv. ex. | | | | | | | | | | 75 | 0.25 | 0.18 |
| 21 | u | Inv. ex. | | | | | | | | | | 80 | 0.45 | 0.01 |
| 22 | v | Inv. ex. | 0.09 | 0.09 | 0.15 | 0.01 | 0.10 | | | | | 180 | 0.25 | 0.14 |
| 23 | w | Inv. ex. | 0.01 | 0.20 | 0.10 | 0.02 | 0.05 | | | | | 77 | 0.45 | 0.15 |
| 24 | x | Inv. ex. | | | | | - | 0.0007 | | | | 71 | 0.40 | 0.02 |

| Ex. | Steel no. | Class | Composition of ingredients (mass%) | | | | | | | | | Mn/S | Sn/Cr | 0.12*Sn+ Cu-0.1*Ni |
|---|---|---|---|---|---|---|---|---|---|---|---|---|---|---|
| | | | W | Mo | V | Nb | Ti | Ca | Mg | Zr | Te | | | |
| 25 | y | Inv. ex. | | | | | 0.01 | | 0.0006 | | | 74 | 2.73 | 0.06 |
| 26 | z | Inv. ex. | | | | | | | | 0.0010 | | 79 | 4.17 | 0.02 |
| 27 | aa | Inv. ex. | | | | | | | | | 0.0007 | 74 | 0.45 | 0.04 |
| 28 | ab | Inv. ex. | | | | 0.01 | | 0.009 | | | | 78 | 0.40 | 0.02 |
| 29 | ac | Inv. ex. | | | | | | 0.006 | | | | 156 | 0.42 | 0.03 |
| 30 | ad | Inv. ex. | | | | | 0.01 | | | 0.05 | | 223 | 0.36 | 0.02 |
| 31 | ae | Inv. ex. | | | 0.05 | | | | | | 0.080 | 85 | 0.40 | 0.04 |
| 32 | af | Inv. ex. | | 0.60 | 0.08 | 0.04 | 0.03 | 0.005 | 0.0008 | | | 72 | 0.33 | 0.04 |
| 33 | ag | Inv. ex. | | | 0.25 | 0.01 | 0.03 | 0.001 | | 0.02 | | 74 | 0.50 | 0.14 |
| 34 | ah | Inv. ex. | | | | | 0.10 | | 0.0005 | | 0.001 | 72 | 0.55 | 0.04 |
| 35 | ai | Inv. ex. | | | | | 0.12 | 0.009 | | | | 81 | 0.42 | 0.02 |
| 36 | ak | Inv. ex. | 0.10 | 0.20 | | | | 0.003 | | 0.01 | | 73 | 0.40 | 0.03 |
| 37 | al | Inv. ex. | | 0.05 | 0.10 | | 0.10 | | 0.0005 | | 0.002 | 80 | 0.50 | 0.02 |
| 38 | am | Inv. ex. | 0.05 | 0.10 | 0.15 | 0.01 | 0.01 | 0.0006 | 0.0006 | 0.0010 | 0.050 | 73 | 0.40 | 0.13 |
| 39 | an | Inv. ex. | | | 0.20 | 0.02 | | | | | 0.09 | 71 | 0.40 | 0.03 |
| 40 | ao | Inv. ex. | | 0.09 | 0.11 | | | 0.007 | | 0.04 | | 71 | 0.38 | 0.10 |
| 41 | ap | Inv. ex. | | 0.11 | 0.12 | | 0.01 | | | | | 80 | 0.55 | 0.09 |
| 42 | aq | Inv. ex. | 0.05 | 0.07 | 0.09 | 0.01 | 0.02 | 0.0006 | 0.0006 | 0.01 | 0.001 | 180 | 0.30 | 0.14 |
| 43 | ar | Inv. ex. | | | | | | | | | | 83 | 0.20 | 0.01 |
| 44 | as | Inv. ex. | | | | | | | | | | 61 | 0.03 | 0.03 |
| 45 | at | Inv. ex. | | | | | | | | | | 106 | 0.02 | 0.02 |
| 46 | au | Inv. ex. | | | | | | | | | | 137 | 0.01 | 0.01 |

Table 3

| Ex. | Steel no. | Class | Composition of ingredients (mass%) | | | | | | | | | | | | |
|---|---|---|---|---|---|---|---|---|---|---|---|---|---|---|---|
| | | | C | Si | Mn | P | S | Al | Cr | Sn | O | Ni | Cu | N | B |
| 47 | ba | Comp. ex. | 0.28 | 1.23 | 0.80 | 0.030 | 0.010 | 0.015 | 0.11 | 0.03 | 0.003 | 0.01 | 0.01 | 0.0052 | |
| 48 | bb | Comp. ex. | 0.55 | 0.80 | 0.29 | 0.009 | 0.005 | 0.025 | 0.15 | 0.04 | 0.002 | 0.01 | 0.01 | 0.0040 | 0.0010 |
| 49 | bc | Comp. ex. | 0.45 | 0.25 | 0.50 | 0.010 | 0.012 | 0.450 | 0.10 | 0.01 | 0.001 | 0.01 | 0.12 | 0.0046 | 0.0011 |
| 50 | bd | Comp. ex. | 0.63 | 0.25 | 0.90 | 0.016 | 0.010 | 0.074 | 0.49 | 0.12 | 0.002 | 0.20 | 0.02 | 0.0055 | 0.0003 |
| 51 | be | Comp. ex. | 0.50 | 0.70 | 2.12 | 0.025 | 0.013 | 0.051 | 1.23 | 0.23 | 0.002 | 0.01 | 0.03 | 0.0046 | |
| 52 | bf | Comp. ex. | 0.50 | 1.12 | 1.60 | 0.019 | 0.022 | 0.098 | 0.82 | 0.30 | 0.005 | 0.01 | 0.01 | 0.0051 | 0.0030 |
| 53 | bg | Comp. ex. | 0.43 | 0.20 | 1.45 | 0.022 | 0.019 | 0.081 | 2.50 | 0.60 | 0.001 | 0.10 | 0.13 | 0.0041 | 0.0006 |
| 54 | bh | Comp. ex. | 0.53 | 1.03 | 0.80 | 0.010 | 0.010 | 0.020 | 0.04 | 0.10 | 0.005 | 0.01 | 0.13 | 0.0048 | |
| 55 | bi | Comp. ex. | 0.53 | 2.10 | 0.85 | 0.005 | 0.011 | 0.030 | 0.52 | 0.13 | 0.001 | 0.01 | 0.02 | 0.0052 | |
| 56 | bj | Comp. ex. | 0.55 | 0.25 | 0.88 | 0.002 | 0.012 | 0.040 | 0.20 | 1.05 | 0.001 | 0.01 | 0.03 | 0.0055 | 0.0005 |
| 57 | bk | Comp. ex. | 0.45 | 0.20 | 0.90 | 0.016 | 0.010 | 0.025 | 0.15 | 0.05 | 0.002 | 0.01 | 0.02 | 0.0039 | 0.0052 |
| 58 | bl | Comp. ex. | 0.50 | 0.03 | 0.78 | 0.016 | 0.009 | 0.11 | 0.11 | 0.05 | 0.002 | 2.10 | 0.37 | 0.0049 | 0.0003 |
| 59 | bm | Comp. ex. | 0.44 | 0.68 | 1.23 | 0.012 | 0.013 | 0.013 | 0.91 | 0.20 | 0.003 | 0.01 | 0.01 | 0.0043 | 0.0003 |
| 60 | bn | Comp. ex. | 0.50 | 0.15 | 1.20 | 0.014 | 0.012 | 5.50 | 0.10 | 0.03 | 0.003 | 0.01 | 0.02 | 0.0055 | |
| 61 | bo | Comp. ex. | 0.50 | 0.45 | 1.20 | 0.013 | 0.011 | 0.026 | 0.12 | 0.05 | 0.006 | 0.01 | 0.03 | 0.0054 | |
| 62 | bp | Comp. ex. | 0.55 | 0.01 | 1.45 | 0.030 | 0.015 | 0.052 | 1.90 | 0.35 | 0.003 | 0.01 | 0.02 | 0.0060 | 0.0005 |
| 63 | bq | Comp. ex. | 0.60 | 1.30 | 1.49 | 0.015 | 0.026 | 0.050 | 0.11 | 0.30 | 0.002 | 0.10 | 0.06 | 0.0044 | |
| 64 | br | Comp. ex. | 0.55 | 0.15 | 0.25 | 0.015 | 0.015 | 0.030 | 0.15 | <0.001 | 0.002 | 0.03 | 0.10 | 0.0055 | 0.0010 |

| Ex. | Steel no. | Class | Composition of ingredients (mass%) | | | | | | | | | Mn/S | Sn/Cr | 0.12*Sn+ Cu-0.1*Ni |
|---|---|---|---|---|---|---|---|---|---|---|---|---|---|---|
| | | | W | Mo | V | Nb | Ti | Ca | Mg | Zr | Te | | | |
| 47 | ba | Comp. ex. | | | | | - | | | | | 80 | 0.27 | 0.01 |
| 48 | bb | Comp. ex. | | | | | 0.02 | | | | | 58 | 0.27 | 0.01 |
| 49 | bc | Comp. ex. | | | | | 0.01 | | | | | 42 | 0.10 | 0.12 |
| 50 | bd | Comp. ex. | | | | | | | | | | 90 | 0.24 | 0.01 |
| 51 | be | Comp. ex. | | 0.30 | 0.30 | | | | | | | 167 | 0.19 | 0.06 |
| 52 | bf | Comp. ex. | 0.07 | 0.20 | 0.20 | | | | | | | 73 | 0.37 | 0.05 |
| 53 | bg | Comp. ex. | 0.25 | 0.15 | | | | 0.0020 | | | | 76 | 0.24 | 0.19 |
| 54 | bh | Comp. ex. | | 0.10 | | 0.04 | | | | | | 80 | 2.50 | 0.14 |
| 55 | bi | Comp. ex. | | 0.60 | | | | 0.0010 | 0.0006 | | | 77 | 0.25 | 0.03 |
| 56 | bj | Comp. ex. | 0.10 | | 0.10 | | | | | | | 73 | 5.25 | 0.16 |
| 57 | bk | Comp. ex. | | | | | 0.10 | | | 0.10 | | 90 | 0.33 | 0.03 |
| 58 | bl | Comp. ex. | | | | | | | | | | 87 | 0.45 | 0.17 |
| 59 | bm | Comp. ex. | | | | 0.04 | 0.23 | | | | 0.05 | 95 | 0.22 | 0.03 |
| 60 | bn | Comp. ex. | 0.15 | 0.50 | 0.15 | | | | | | | 100 | 0.30 | 0.02 |
| 61 | bo | Comp. ex. | | | 0.07 | | | | | 0.02 | | 109 | 0.42 | 0.04 |
| 62 | bp | Comp. ex. | | | | | 0.01 | | 0.0006 | | 0.10 | 97 | 0.18 | 0.06 |
| 63 | bq | Comp. ex. | | 0.10 | 0.30 | | | | | | | 57 | 2.73 | 0.09 |
| 64 | br | Comp. ex. | | | 0.50 | | 0.01 | 0.0008 | | | | 17 | ##### | #VALUE! |

To evaluate the hot rollability of a steel material, a test material of a cross-section of 80 mm square was cut out from the steel material, a thermocouple was attached to the center part, and the material was loaded into a 1050°C electric furnace.

When the center part of the test material reached 1045°C, the material was taken out from the electric furnace after 30 minutes and was hot rolled when the surface temperature reached 1000°C. The hot rolling was performed for three continuous passes to successively reduce the plate thickness of 80 mm to 64 mm, 51 mm, and 41 mm, then the material was air-cooled to room temperature.

With a test material which cracked in the rolling, the test was suspended at the point of time of cracking. Other test materials were cooled, then a cross-section of the rolled material was cut out and observed for surface flaws. In the judgment of flaws, materials with flaws of less than a depth of 100 μm were evaluated as "flawless" while ones with flaws of over 100 μm were evaluated as "flawed".

As a result of observation, the steel materials of the compositions which are shown in Table 1 and Table 2 (continuation of Table 1) (Invention Examples 1 to 46) were found to be "flawless, so were then evaluated for mechanical properties. In the steel material of the compositions of Examples 53 and 56 to 58 which are shown in Table 3, the materials were found to be "flawed".

As shown in Table 3, the steel materials of Examples 53, 56, and 58 had Sn, Cu, and Ni not satisfying 0.12×Sn+Cu-0.1×Ni<0.15. In Example 57, B (selective element) exceeds the upper limit 0.005% of the range of the present invention (see Table 3).

Regarding Examples 53 and 56 to 58 where were judged to be "flawed" in the hot rolling, there was remarkable occurrence of flaws at the stage of production of the steel material and there was a problem in manufacturability, so subsequent evaluation of the properties was not performed (see Table 6).

In Example 55, the decarburization became remarkable at the hot forging stage of the steel material. After that, even if applying ferritic nitrocarborizing and induction hardening, the hardness of the surface layer part was insufficient, so subsequent evaluation of the properties was not performed.

Regarding the other examples, the materials were forged and annealed, then cylindrical test pieces of diameters of 45 mm and lengths of 100 mm were fabricated for evaluation of machineability and then were evaluated for machineability. Note that, the test pieces for evaluation of machineability were forged and annealed and were evaluated for machineability in the state of the forged and annealed steel material.

The machineability was evaluated by a deep hole drilling test by MQL (minimum quantity lubrication) using an NC machining center used for production of gears, crankshafts, and other auto parts.

Table 4 shows the drilling conditions. Holes were drilled under the drilling conditions which are shown in Table 4 and the number of holes until the drill broke was measured. When reaching 1000 or more holes, the machineability was judged as being good and the test was ended.

Table 4

| Machining conditions | | Drill | | Others | |
|---|---|---|---|---|---|
| Cutting speed | 65 m/min | Size | $\phi$5 mmx length 168 mm | Hole forming depth | 90 mm |
| Feed | 0.17 mm/rev | Material | | | Total number of holes until drill breakage (Test ended at 1000 holes) |
| Lubrication | Mist lubrication (MQL) | Projection | Ceramic coated cemented carbide 105 mm | Judgment of lifetime | |

Table 5 and Table 6 show results of machineability evaluation tests. As shown in Table 5, in the invention examples of Examples 1 to 46, the number of drilled holes was over 1000 in each case and therefore the machineability was excellent.

On the other hand, as shown in Table 6, in the comparative examples of Examples 50 to 52 and 59, the number of drilled holes failed to reach 1000 and therefore the machineability was insufficient.

Table 5

| Ex. | Steel no. | Class | Machine-ability | Ferritic nitrocarborizing | | | 0.05×{1-0.006×(600 -ferritic nitrocarborizing temperature (°C))} × {(ferritic nitrocarborizing time nitrocarborizing (hr)+1)/3 ($10^{-3}$mm=mm) | Induction heating conditions | After induction hardening | | | Corrosion resistance | |
|---|---|---|---|---|---|---|---|---|---|---|---|---|---|
| | | | No. of holes drilled | Temp. (°C) | Time (hr) | N compound layer thickness ($\mu$m) | | Temp. (°C) | Nitrided layer thickness (mm) | 0.2 mm position from surface | | Test conditions (surface grinding) | 30% water-containing lubrication environment, roller pitching test $10^6$X durability (stress: 3500 MPa) |
| | | | | | | | | | | 300°C tempering, Vicker's hardness | Pore density (/mm²) | | |
| 1 | a | Inv. ex. | >1000 | 600 | 2.0 | 43 | 50 | 930 | 0.70 | 680 | >5000 | No grinding | Durable |
| 2 | b | Inv. ex. | >1000 | 600 | 2.0 | 45 | 50 | 950 | 0.70 | 675 | >5000 | No grinding | Durable |
| 3 | c | Inv. ex. | >1000 | 650 | 2.0 | 37 | 65 | 930 | 0.85 | 723 | >5000 | 0.10 mm grinding | Durable |
| 4 | d | Inv. ex. | >1000 | 650 | 1.0 | 40 | 43 | 980 | 0.53 | 721 | >5000 | 0.06 mm grinding | Durable |
| 5 | e | Inv. ex. | >1000 | 650 | 5.0 | 78 | 130 | 1010 | 1.20 | 756 | >5000 | No grinding | Durable |
| 6 | f | Inv. ex. | >1000 | 600 | 5.0 | 98 | 100 | 930 | 1.15 | 667 | >5000 | No grinding | Durable |
| 7 | g | Inv. ex. | >1000 | 650 | 5.0 | 89 | 130 | 995 | 1.20 | 761 | >5000 | No grinding | Durable |
| 8 | h | Inv. ex. | >1000 | 600 | 2.0 | 41 | 50 | 1010 | 0.70 | 686 | >5000 | 0.06 mm grinding | Durable |
| 9 | i | Inv. ex. | >1000 | 600 | 3.0 | 58 | 67 | 930 | 0.85 | 669 | >5000 | 0.10 mm grinding | Durable |
| 10 | j | Inv. ex. | >1000 | 600 | 1.0 | 32 | 33 | 930 | 0.50 | 702 | >5000 | 0.06 mm grinding | Durable |
| 11 | k | Inv. ex. | >1000 | 600 | 1.5 | 36 | 42 | 935 | 0.65 | 685 | >5000 | 0.06 mm grinding | Durable |
| 12 | l | Inv. ex. | >1000 | 600 | 2.0 | 42 | 50 | 930 | 0.70 | 703 | >5000 | 0.06 mm grinding | Durable |
| 13 | m | Inv. ex. | >1000 | 600 | 2.0 | 40 | 50 | 980 | 0.75 | 698 | >5000 | No grinding | Durable |
| 14 | n | Inv. ex. | >1000 | 600 | 2.5 | 55 | 58 | 950 | 0.85 | 692 | >5000 | 0.10 mm grinding | Durable |

| Ex. | Steel no. | Class | Machine-ability | Ferritic nitrocarborizing | | | $0.05 \times \{1-0.006 \times (600$ -ferritic nitro-carborizing temperature (°C))$\} \times \{$ (ferritic nitrocarborizing time nitrocarborizing (hr)+1)/3 $(10^{-3}\text{mm}=\text{mm})$ | Induction heating conditions | After induction hardening | | 0.2 mm position from surface | | Corrosion resistance | |
|---|---|---|---|---|---|---|---|---|---|---|---|---|---|---|
| | | | No. of holes drilled | Temp. (°C) | Time (hr) | N compound layer thickness (μm) | | Temp. (°C) | Nitrided layer thickness (mm) | | 300°C tempering, Vicker's hardness | Pore density (/mm²) | Test conditions (surface grinding) | 30% water-containing lubrication environment, roller pitching test $10^6$X durability (stress: 3500 MPa) |
| 15 | o | Inv. ex. | >1000 | 550 | 4.0 | 41 | 58 | 980 | 1.05 | | 702 | >5000 | No grinding | Durable |
| 16 | p | Inv. ex. | >1000 | 625 | 5.0 | 98 | 115 | 1050 | 1.20 | | 698 | >5000 | No grinding | Durable |
| 17 | q | Inv. ex. | >1000 | 600 | 2.0 | 46 | 50 | 930 | 0.80 | | 675 | >5000 | 0.10 mm grinding | Durable |
| 18 | r | Inv. ex. | >1000 | 625 | 2.0 | 55 | 58 | 930 | 0.70 | | 688 | >5000 | No grinding | Durable |
| 19 | s | Inv. ex. | >1000 | 600 | 3.0 | 58 | 67 | 930 | 0.90 | | 701 | >5000 | 0.10 mm grinding | Durable |
| 20 | t | Inv. ex. | >1000 | 600 | 3.0 | 46 | 67 | 985 | 0.90 | | 721 | >5000 | 0.10 mm grinding | Durable |
| 21 | u | Inv. ex. | >1000 | 600 | 0.5 | 20 | 25 | 930 | 0.45 | | 668 | >5000 | 0.06 mm grinding | Durable |
| 22 | v | Inv. ex. | >1000 | 650 | 3.0 | 68 | 87 | 990 | 0.85 | | 731 | >5000 | No grinding | Durable |
| 23 | w | Inv. ex. | >1000 | 600 | 2.0 | 41 | 50 | 1000 | 0.75 | | 690 | >5000 | No grinding | Durable |
| 24 | x | Inv. ex. | >1000 | 600 | 2.5 | 51 | 58 | 930 | 0.80 | | 679 | >5000 | No grinding | Durable |
| 25 | y | Inv. ex. | >1000 | 550 | 5.0 | 66 | 70 | 930 | 0.75 | | 669 | >5000 | No grinding | Durable |
| 26 | z | Inv. ex. | >1000 | 550 | 5.0 | 63 | 70 | 930 | 0.80 | | 705 | >5000 | No grinding | Durable |
| 27 | aa | Inv. ex. | >1000 | 550 | 5.0 | 59 | 70 | 930 | 0.90 | | 685 | >5000 | No grinding | Durable |
| 28 | ab | Inv. ex. | >1000 | 600 | 2.0 | 45 | 50 | 950 | 0.75 | | 703 | >5000 | 0.06 mm grinding | Durable |
| 29 | ac | Inv. ex. | >1000 | 585 | 5.0 | 90 | 91 | 935 | 0.95 | | 687 | >5000 | 0.15 mm grinding | Durable |

EP 2 634 279 B1

23

| Ex. | Steel no. | Class | Machine-ability No. of holes drilled | Ferritic nitrocarborizing Temp. (°C) | Time (hr) | N compound layer thick-ness (μm) | $0.05 \times \{1-0.006 \times (600 - \text{ferritic nitrocarborizing temperature (°C)})\} \times \{(\text{ferritic nitrocarborizing time nitrocarborizing (hr)}+1)/3$ $(10^{-3}mm=mm)$ | Induction heating conditions Temp. (°C) | After induction hardening Nitrided layer thickness (mm) | 0.2 mm position from surface 300°C tempering, Vicker's hardness | Pore density (/mm²) | Corrosion resistance Test conditions (surface grinding) | 30% water-containing lubrication environment, roller pitching test $10^6$X durability (stress: 3500 MPa) |
|---|---|---|---|---|---|---|---|---|---|---|---|---|---|
| 30 | ad | Inv. ex. | >1000 | 600 | 5.0 | 90 | 100 | 930 | 1.05 | 680 | >5000 | No grinding | Durable |
| 31 | ae | Inv. ex. | >1000 | 600 | 2.0 | 41 | 50 | 930 | 0.70 | 691 | >5000 | 0.10 mm grinding | Durable |
| 32 | af | Inv. ex. | >1000 | 600 | 1.0 | 32 | 33 | 930 | 0.50 | 726 | >5000 | 0.06 mm grinding | Durable |
| 33 | ag | Inv. ex. | >1000 | 600 | 2.0 | 46 | 50 | 980 | 0.70 | 679 | >5000 | 0.06 mm grinding | Durable |
| 34 | ah | Inv. ex. | >1000 | 650 | 1.5 | 52 | 54 | 970 | 0.70 | 685 | >5000 | No grinding | Durable |
| 35 | ai | Inv. ex. | >1000 | 600 | 3.0 | 65 | 67 | 970 | 0.85 | 674 | >5000 | No grinding | Durable |
| 36 | ak | Inv. ex. | >1000 | 550 | 5.0 | 66 | 70 | 915 | 1.05 | 711 | >5000 | 0.10 mm grinding | Durable |
| 37 | al | Inv. ex. | >1000 | 600 | 2.0 | 42 | 50 | 985 | 0.75 | 680 | >5000 | 0.08 mm grinding | Durable |
| 38 | am | Inv. ex. | >1000 | 550 | 2.0 | 28 | 35 | 930 | 0.50 | 689 | >5000 | 0.06 mm grinding | Durable |
| 39 | an | Inv. ex. | >1000 | 550 | 3.0 | 39 | 47 | 930 | 0.70 | 694 | >5000 | 0.06 mm grinding | Durable |
| 40 | ao | Inv. ex. | >1000 | 600 | 2.0 | 47 | 50 | 930 | 0.70 | 701 | >5000 | 0.08 mm grinding | Durable |
| 41 | ap | Inv. ex. | >1000 | 650 | 2.5 | 75 | 76 | 930 | 0.85 | 659 | >5000 | No grinding | Durable |
| 42 | aq | Inv. ex. | >1000 | 600 | 5.0 | 81 | 100 | 975 | 0.41 | 701 | >5000 | No grinding | Durable |

| Ex. | Steel no. | Class | Machine-ability — No. of holes drilled | Ferritic nitrocarborizing — Temp. (°C) | Time (hr) | N compound layer thickness (μm) | $0.05\times\{1\text{-}0.006\times(600\text{ -ferritic nitrocarborizing temperature (°C))}\}\times\{$ (ferritic nitrocarborizing time nitrocarborizing $(hr)+1)/3$ $(10^{-3}mm=mm)$ | Induction heating conditions — Temp. (°C) | After induction hardening — Nitrided layer thickness (mm) | 0.2 mm position from surface — 300°C tempering, Vicker's hardness | Pore density $(/mm^2)$ | Corrosion resistance — Test conditions (surface grinding) | 30% water-containing lubrication environment, roller pitching test $10^6$X durability (stress: 3500 MPa) |
|---|---|---|---|---|---|---|---|---|---|---|---|---|---|
| 43 | ar | Inv. ex. | >1000 | 590 | 3.0 | 35 | 63 | 990 | 0.40 | 661 | >5000 | 0.08 mm grinding | Durable |
| 44 | as | Inv. ex. | >1000 | 610 | 2.0 | 15 | 53 | 975 | 0.44 | 653 | >5000 | No grinding | Durable |
| 45 | at | Inv. ex. | >1000 | 600 | 2.0 | 16 | 50 | 1020 | 0.55 | 655 | >5000 | No grinding | Durable |
| 46 | au | Inv. ex. | >1000 | 595 | 2.0 | 13 | 49 | 1015 | 0.51 | 653 | >5000 | No grinding | Durable |

Table 6

| Ex. | Steel no. | Class | Machineability | Ferritic nitrocarborizing | | | $0.05\times\{1-0.006\text{x}(600$ -ferritic nitrocarbor izing temperature (°C))$\}\times$ $\{$(ferritic nitrocarbor izing time (hr)+1)/3 $(10^{-3}\text{mm=mm})$ | induction heating conditions | After induction hardening | | | Corrosion resistance | |
|---|---|---|---|---|---|---|---|---|---|---|---|---|---|
| | | | | | | | | | | 0.2 mm position from surface | | | |
| | | | No. of holes drilled | Temp. (°C) | Time (hr) | N com-pound lay-er thick-ness (μm) | | Temp. (°C) | Nitrided layer thickness (mm) | 300°C tem-pering, Vicker's hardness | Pore density (/mm$^2$) | Test condi-tions (sur-face grind-ing) | 30% water-con-taining lubrication environment, roll-er pitching test $10^6$X durability (stress: 3500 MPa) |
| 47 | ba | Comp. ex. | >1000 | 600 | 2.0 | 48 | 50 | 900 | _0.38_ | _611_ | >5000 | 0.10 mm grinding | _Breakage in middle_ |
| 48 | bb | Comp. ex. | >1000 | 550 | 1.0 | _9_ | 23 | 920 | _0.35_ | 710 | >5000 | No grinding | _Breakage in middle_ |
| 49 | bc | Comp. ex. | >1000 | 600 | 0.5 | 8 | 25 | 900 | _0.32_ | 678 | >5000 | No grinding | _Breakage in middle_ |
| 50 | bd | Comp. ex. | _88_ - | 585 | 1.0 | 28 | 30 | 900 | _0.36_ | 734 | >5000 | 0.06 mm grinding | Durable |
| 51 | be | Comp. ex. | _113_ | 550 | 3.0 | 43 | 47 | 920 | _0.25_ | _639_ | >5000 | 0.08 mm grinding | Breakage in middle |
| 52 | bf | Comp. ex. | _553_ | 585 | 2.0 | 42 | 46 | 920 | _0.39_ | 769 | >5000 | 0.08 mm grinding | Durable |
| 53 | bg | Comp. ex. | _Many flaws at casting and rolling (no subsequent evaluation)_ | | | | | | | | | | |
| 54 | bh | Comp. ex. | >1000 | 600 | 1.0 | 30 | 33 | 930 | _0.39_ | 658 | >5000 | 0.06 mm grinding | _Breakage in middle_ |
| 55 | bi | Comp. ex. | _Remarkable decarburization at hot forging (no subsequent evaluation)_ | | | | | | | | | | |
| 56 | bj | Comp. ex. | _Many flaws atcasting and rolling (no subsequent evaluation)_ | | | | | | | | | | |
| 57 | bk | Comp. ex. | _Many flaws at casting and rolling (no subsequent evaluation)_ | | | | | | | | | | |

| Ex. | Steel no. | Class | Machineability | Ferritic nitrocarborizing | | | 0.05×{1-0.006x(600-ferritic nitrocarbor izing temperature (°C))} × {(ferritic nitrocarbor izing time (hr)+1)/3 (10^{-3}mm=mm) | induction heating conditions | After induction hardening | 0.2 mm position from surface | | Corrosion resistance | |
| --- | --- | --- | --- | --- | --- | --- | --- | --- | --- | --- | --- | --- | --- |
| | | | No. of holes drilled | Temp. (°C) | Time (hr) | N compound layer thickness (μm) | | Temp. (°C) | Nitrided layer thickness (mm) | 300°C tempering, Vicker's hardness | Pore density (/mm²) | Test conditions (surface grinding) | 30% water-containing lubrication environment, roller pitching test 10^6X durability (stress: 3500 MPa) |
| 58 | bl | Comp. ex. | *Many flaws at casting and rolling (no subsequent evaluation)* | | | | | | | | | | |
| 59 | bm | Comp. ex. | 23 | 600 | 3.0 | 60 | 67 | 900 | 0.42 | 741 | >5000 | No grinding | Durable |
| 60 | bn | Comp. ex. | >1000 | 600 | 2.0 | 9 | 50 | 920 | 0.43 | 674 | >5000 | 0.10 mm grinding | *Breakage in middle* |
| 61 | bo | Comp. ex. | >1000 | 585 | 1.0 | 25 | 30 | 920 | 0.42 | 680 | >5000 | 0.06 mm grinding | *Breakage in middle* |
| 62 | bp | Comp. ex. | >1000 | 585 | 2.0 | 41 | 46 | 930 | 0.41 | *639* | >5000 | No grinding | *Breakage in middle* |
| 63 | bq | Comp. ex. | >1000 | 585 | 0.5 | 8 | 23 | 920 | *0.36* | 710 | >5000 | No grinding | *Breakage in middle* |
| 64 | br | Comp. ex. | >1000 | 585 | 2.0 | 5 | 46 | 900 | *0.35* | *643* | >5000 | 0.06 mm grinding | *Breaking in middle* |

EP 2 634 279 B1

27

As the roller pitching test pieces, small roller test pieces which have a cylindrical part of a diameter of 26 mm and a width of 28 mm and large roller test pieces which have a diameter of 130 mm and a width of 18 mm were fabricated and evaluated for surface fatigue strength. As test pieces for measurement of 300°C tempering hardness, cylindrical test pieces of a diameter of 26 mm and a length of 100 mm were fabricated and evaluated for tempering softening resistance.

The small roller test pieces, large roller test pieces, and cylindrical test pieces were nitrided by ferritic nitrocarborizing (nitriding by nitriding gas composition: $N_2$ (0.45 $Nm^3$/hr)+$NH_3$ (0.5 $Nm^3$/hr) +CO2 (0. 05 $Nm^3$/hr), then, after nitriding, cooling by $N_2$ gas), then were induction hardened (frequency: 100 kHz).

The coolant used at the time of induction hardening was tap water or a boiler quencher. After quenching, the test piece was tempered at 150°C for 1 hr.

Due to the ferritic nitrocarborizing, at the surfacemost layers of the test pieces, Fe-N compounds were formed. Inside, nitrogen diffusion layers were formed. The Fe-N compounds were mainly $\varepsilon$ compounds and $\gamma'$ compounds.

$\varepsilon$ compounds are formed along the surfaces of the test pieces in substantially even quality film shapes and form clear boundaries from the matrix phase. The depth from the surface to the boundary is defined as the thickness of the nitrogen compound layer. Nitrogen diffuses and permeates to the inside from the nitrogen compound layer and forms a region with a high N concentration. The region up to where the N concentration becomes the same as the N concentration before ferritic nitrocarborizing is defined as the nitrided layer.

The N diffusion and permeation region cannot be differentiated by an optical microscope, to EPMA line analysis is used for measurement of the N concentration and quantitative differentiation. The thicknesses of the nitrogen compound layer and nitrided layer become greater the higher the temperature and/or the longer the time of the ferritic nitrocarborizing.

The Fe-N compounds and matrix phase transformed to austenite due to the induction heating, then transformed to martensite at the subsequent quenching.

The nitrogen which was introduced by the ferritic nitrocarborizing formed a solid solution in the austenite at the heating stage. With short time induction heating, leaving aside the surface, the concentration of nitrogen at the inside did not change much at all compared with the time of ferritic nitrocarborizing, so the martensite has nitrogen forming a solid solution in it at a concentration substantially the same as the time of ferritic nitrocarborizing. The concentration of nitrogen in martensite can be measured by EPMA line analysis.

If the nitrogen concentration in the steel material becomes higher, the hardness, 300°C tempering hardness, and the corrosion resistance are improved. The durability of the steel material in the roller pitching test has a positive correlation with the 300°C tempering hardness. In the present invention, the target lower limit value was made a Vicker's hardness of 650.

Due to the above heat treatment, the surface layer part is formed with fine pores. These pores function as pits which containing lubrication oil at the surface of the steel part and improve the lubricating ability. In the present invention, to secure a sufficient lubricating ability, the lower limit of the pore density was set to 5000/mm$^2$.

The pores are sometimes better to be removed, depending on the usage environment, to improve the mechanical properties. For example, in a usage environment in which foreign matter is mixed, the toughness of the regions including the pores becomes insufficient and the pores form starting points for peeling and breakage.

That is, there are sometimes cases where grinding away the compound layer which is produced by the ferritic nitrocarborizing after induction hardening is preferable. However, if completely grinding away the nitrided layer, the effect of ferritic nitrocarborizing is lost, so it is necessary to leave the nitrided layer in a predetermined thickness.

Each cylindrical test piece for measurement of the 300°C tempering hardness was soft nitrided, then induction hardened under the same conditions as the small roller test pieces and the large roller test pieces.

After that, the test piece was tempered at 300°C for 600 minutes and was measured for hardness from the surface to the core part at a cut cross-section using a Vicker's hardness meter. The surface layer was martensite and the core part was ferrite-pearlite. The nitrogen concentration at a location of 0.2 mm from the surface was measured by EPMA.

The density of pores with a circle equivalent diameter of 0.1 to 1 $\mu$m was found by ferritic nitrocarborizing and induction hardening a test piece under the same conditions as the case of a small roller test piece and large roller test piece, cutting it at a plane perpendicular to the rolling direction, burying the cut section in a resin, polishing this to a mirror surface, and processing the surfacemost layer structure by image processing.

The number of pores was measured at a magnification of 3000X for 40 or more fields of 50 $\mu$m$^2$ size each, the measurement value was converted to a number of pores per mm$^2$, and it was judged if there were 5000 or more pores.

As shown in Table 5, in the invention examples of Examples 1 to 46, the thickness of the nitrided layer which was measured by EPMA was 0.4 mm or more. The targeted 300°C tempering hardness and pore density were obtained.

Further, since the thickness of the nitrided layer was 0.4 mm or more, even if removing the maximum amount of grinding of 0.2 mm by grinding, a thickness of 0.2 mm or more can be secured. A 300°C tempering hardness and the corrosion resistance could be maintained.

Further, in the invention examples of Examples 1 to 46, in the roller pitching fatigue tests under a 30% water-containing lubrication oil environment, a durability of 1,000,000 cycles ($10^6$X) was secured under 3500 MPa stress conditions.

On the other hand, as shown in Table 6, in Examples 47 to 48, 51, 54, and 60 to 64 of the comparative examples of Examples 47 to 64, breakage occurred before reaching 1,000,000 cycles under the above stress conditions, so the durability in a corrosive environment was insufficient.

The above heat treated large roller test pieces and small roller test pieces were used for a standard surface fatigue test of the "roller pitching fatigue test".

The roller pitching fatigue test was performed by pushing against small roller test pieces by various hertz stress surface pressures and against large roller test pieces to make the peripheral speed directions of the two rollers the same and by making the slip rate at the contact parts -40% (peripheral speed of large roller test piece becomes 40% larger than peripheral speed of small roller test pieces) for rotation.

The temperature of the lubrication oil which was fed to the contact parts (gear oil) was made 90°C and the contact stress between the large roller test pieces and the small roller test pieces was made 3500 MPa.

The cutoff in the tests was made 1,000,000 cycles ($10^6$X). When no pitching occurred at the small roller test pieces and 1,000,000 cycles were reached, it was judged that durability of the small rollers was secured. Pitching was detected by a vibration meter which was attached to the test machine. After vibration was detected, the rotation of the two rollers was stopped and the occurrence of pitching and number of rotations were confirmed.

Note that, it running the tests in an environment in which the test pieces easily corrode, it is believed possible to evaluate the durability in an actual corrosive environment. In the lubrication oil, 30% water was mixed.

As shown in Table 5, in each of the invention examples of Examples 1 to 46, durability of 1,000,000 cycles ($10^6$X) was exhibited in an environment of a lubrication oil which contains 30% water (corrosive environment).

On the other hand, as shown in Table 6, in each of Examples 47 to 49, 51, 58, and 60 to 64 among the comparative examples of Examples 47 to 64, breakage occurred before reaching 1,000,000 cycles. The durability in an environment of a lubrication oil which contains 30% water (corrosive environment) was insufficient.

The compositions of ingredients of the steel materials which are used in Examples 1 to 46, as shown in Table 1 and Table 2, are within the range of the present invention. Further, the conditions of ferritic nitrocarborizing and induction heating and quenching are also in the range of the present invention.

On the other hand, the compositions of ingredients of the steel materials which are used in Examples 47 to 64, as shown in Table 3, have one or more ingredients outside the range of the present invention. In particular, in a steel material which is insufficient in ingredients which contribute to the 300°C tempering hardness, for example, C, Si, etc. and in a steel material which has a composition of ingredients which contribute to the corrosion resistance and heat treatment conditions outside the range of the present invention (for example, a steel material with a Sn/Cr not satisfying the range of the present invention and a steel material with nitriding conditions not satisfying the range of the present invention), the results of a roller pitching test under a lubricating environment which contains 30% water (corrosive environment) failed to reach the targets and the durability was poor.

Further, if Mn/S is less than 70 and the ferritic nitrocarborizing conditions (temperature and time) are not in the range of the present invention, the amount of penetration of N in the ferritic nitrocarborizing is insufficient and similarly the durability is poor.

In the end, in the comparative examples of Examples 47 to 64, as shown in Table 6, (a) the surface fatigue strength in a corrosive environment fails to reach the target 1,000,000 cycles ($10^6$X), (b) even if a good durability is exhibited, the machineability is insufficient, or (c) numerous flaws occur or decarburization becomes remarkable at the time of production of the steel material and the mechanical properties cannot be evaluated.

In Examples 49, 51, and 62, the Sn/Cr is low. This is believed to be one cause of the insufficient fatigue durability in a corrosive environment.

In Examples 48, 49, 63, and 64, the Mn/S is low and concentration of S at the surface cannot be prevented, so the thickness of the compound layer at the time of ferritic nitrocarborizing is thin, the thickness of the nitrided layer of the steel part after induction hardening becomes a thin one of less than 0.4 mm, the N concentration up to a depth of 0.2 mm from the surface is low, and the Vicker's hardness with 300°C tempering is less than 650. This is believed to be one cause of the insufficient fatigue durability in a corrosive environment.

In Example 47, the C concentration is low, so the 300°C tempering hardness is insufficient, while in Example 62, the Si concentration is low, so the 300°C tempering hardness is insufficient. This is believed to be one cause of the insufficient fatigue durability in a corrosive environment.

In Example 54, Cr is lower than the lower limit of the range of the present invention, so it is believed the corrosion resistance becomes insufficient and the fatigue durability in a corrosive environment is insufficient. In Example 60, Al exceeds the upper limit of the range of the present invention, so it is believed that the Al precipitates coarsen and the surface fatigue strength did not reach the target under a corrosive environment.

In Example 61, the oxygen concentration exceeds the upper limit of the range of the present invention, so oxides are excessively formed. It is believed that these oxides act as starting points of fatigue fracture at the time of a fatigue test and result in insufficient durability.

The machineability was evaluated by running a hole drilling test under the conditions which are shown in Table 4. In Examples 50 to 52 and 59, the target was achieved.

In Example 50, C exceeds the range of the present invention, in Examples 51 and 52, Mn exceeds the range of the present invention, and in Example 59, Ni exceeds the range of the present invention. These are considered the causes for raising the hardness at ordinary temperature and lowering the drillability.

(Example 2)

Even if the composition of ingredients of a steel material is in the range of the present invention, if the temperature and time of the ferritic nitrocarborizing do not satisfy the range of the present invention, the amount of penetration of N in the ferritic nitrocarborizing is insufficient and the durability is inferior.

Table 7 shows examples (invention examples and comparative examples). In the comparative example of Example 63, the ferritic nitrocarborizing temperature is low, so a sufficient thickness of a nitrided layer is not formed and the fatigue durability in a corrosive environment is insufficient.

In the comparative example of Example 64, the induction hardening temperature is less than 900°C, a sufficient hardness cannot be obtained, and the fatigue durability in a corrosive environment is insufficient. In the invention examples of Examples 7 and 9, the fatigue durability in a corrosive environment is sufficient.

Table 7

| Ex. | Steel no. | Class | Machineability | Ferritic nitrocarborizing | | | $0.05 \times \{1-0.006 \times (600$ -ferritic nitrocarbor izing temperature (°C))$\} \times \{$(ferritic nitrocarbor izing time (hr)+1)/3 ($10^{-3}$mm=mm) | Induction heating conditions | After induction hardening | | | Corrosion resistance | |
|---|---|---|---|---|---|---|---|---|---|---|---|---|---|
| | | | No. of holes drilled | Temp. (°C) | Time (hr) | N com-pound layer thicknes s ($\mu$m) | | Temp. (°C) | Nitrided layer thickness (mm) | Position 0.2 mm from surface | | Test condi-tions (sur-face grind-ing) | 30% water-con-taining lubrication environment roller pitching test $10^6$X durability (stress: 3500 MPa) |
| | | | | | | | | | | 300°C tempering Vicker's hardness | Pore density (/mm$^2$) | | |
| 7 | g | Inv. ex. | >1000 | 650 | 5.0 | 89 | 130 | 995 | 1.20 | 761 | >5000 | No grinding | Durable |
| 63 | g | Comp. ex. | >1000 | _530_ | 1.0 | _8_ | 19 | 930 | _0.33_ | _643_ | >5000 | No grinding | _Breakage in middle_ |
| 9 | i | Inv. ex. | >1000 | 600 | 3.0 | 58 | 67 | 930 | 0.85 | 669 | >5000 | 0.10 mm grinding | Durable |
| 64 | i | Comp. ex. | >1000 | 550 | 0.5 | 17 | 18 | _870_ | 0.40 | _623_ | >5000 | 0.10 mm grinding | _Breakage in middle_ |

As stated above, when removing a nitrogen compound layer which is produced at the time of ferritic nitrocarborizing by machining, if the martensite which is produced from the nitrogen compound layer and the martensite which is produced from the nitrogen diffusion layer are mixed on the surface, this becomes a cause of unevenness of the surface hardness, so when grinding the surface layer of the steel material, it becomes possible to secure an amount of grinding of the thickness of the nitrogen compound layer or more.

FIG. 4 shows the relationship between the ferritic nitrocarborizing (or nitriding) conditions and thickness of the compound layer which was prepared based on data of the examples. As shown in FIG. 4, the thickness of the nitrogen compound layer exceeds the value which is found by $0.05\times\{1-0.006\times(600-$ nitriding or ferritic nitrocarborizing treatment temperature (°C))$\}\times\{($ nitriding or ferritic nitrocarborizing treatment time $(hr)+1)/3\}$, so if securing an amount of grinding of 0.2 mm or less by this value or more, it is understood that an effect is obtained by adding N to the steel material by ferritic nitrocarborizing.

Industrial Applicability

As explained above, according to the present invention, it is possible to provide steel for machine structural purposes for surface hardening use which is used as a material for a steel part for machine structural purposes excellent in surface fatigue strength and corrosion resistance which is provided with a high surface hardness, temper softening resistance, and machineability which cannot be obtained by a conventional soft nitrided induction hardened steel part and, furthermore, is provided with a sufficient lubrication film for the working surfaces, steel parts for machine structural purposes which are produced by that steel, and a method of production of those parts.

In particular, the steel for machine structural purposes for surface hardening use of the present invention can be applied to power transmission parts of automobiles etc., are suitable as a material for parts which require a high surface pressure fatigue strength in a corrosive environment such as gears, continuously variable transmissions, constant velocity joints, hubs, bearings, etc. and greatly contribute to the higher output and lower cost of automobiles etc.

**Claims**

1. Steel for machine structural purposes for surface hardening use **characterized by** containing, by mass%,

C: 0.30 to 0.60%,
Si: 0.02 to 2.0%,
Mn: 0.35 to 1.5%,
Al: 0.001 to 0.5%,
Cr: 0.05 to 2.0%,
Sn: 0.001 to 1.0%,
S: 0.0001 to 0.021%,
N: 0.0030 to 0.0055%,
Ni: 0.01 to 2.0%,
Cu: 0.01 to 2.0%,
P: 0.030% or less, and
O: 0.005% or less,

having a balance of Fe and unavoidable impurities,
having contents of Sn, Cu, Ni, Mn, and S satisfying the following formulas (1) and (2); and having contents of Sn and Cr satisfying the following formula (3);

$$-0.19 \leq 0.12 \times Sn + Cu - 0.1 \times Ni \leq 0.15 ... (1)$$

$$60 \leq Mn/S \leq 300 ... (2)$$

$$Sn \geq 0.2 \times Cr ... (3),$$

wherein said steel optionally further contains, by mass%, one or more of B: 0.0003 to 0.005%,

W: 0.0025 to 0.5%,
Mo: 0.05 to 1.0%,
V: 0.05 to 1.0%,
Nb: 0.005 to 0.3%, and
Ti: 0.005 to 0.2%,

and wherein said steel optionally further contains, by mass%, one or more of Ca: 0.0005 to 0.61%,

Mg: 0.0005 to 0.01%,
Zr: 0.0005 to 0.05%, and
Te: 0.0005 to 0.1%.

2. A steel part for machine structural purposes which is produced by nitriding or ferritic nitrocarburizing then induction hardening steel for machine structural purposes for surface hardening use as set forth in claim 1, said steel part **characterized in that**

(a) a surface layer of a depth of 0.4 mm or more from the surface is a nitrided layer and
(b) a Vicker's hardness is 650 or more at the surface layer of a depth of 0.2 mm from the surface when treating the steel by tempering at 300°C.

3. A steel part for machine structural purposes as set forth in claim 2 **characterized in that** at a layer inside said nitrided layer at a depth of 5 $\mu$m or more from the surface, there are 5000/mm$^2$ or more of pores of a circle equivalent diameter of 0.1 to 1 $\mu$m.

4. A steel part for machine structural purposes as set forth in claim 2 or 3 **characterized in that** a layer which corresponds to the compound layer which is formed by nitriding or ferritic nitrocarburizing at the surface side in said nitrided layer is removed by machining.

5. A method of production of a steel part for machine structural purposes **characterized by** forming steel for machine structural purposes for surface hardening use as set forth in claim 1 into a predetermined shape by forging or/and cutting, then treating the shaped steel member by nitriding or ferritic nitrocarburizing at 550 to 650°C for 0.5 to 5 hours, then treating it by induction heating at 900 to 1100°C for 0.05 to 5 seconds for quenching, and (a) forming a nitrided layer at a surface layer of a depth of 0.2 mm or more from the surface and (b) making a Vicker's hardness 650 or more at the surface layer of a depth of 0.2 mm from the surface when tempering at 300°C.

6. A method of production of a steel part for machine structural purposes as set forth in claim 5 **characterized by** performing said induction hardening, then grinding away the surface layer by an amount of grinding (mm) satisfying the following formula (4):

$$0.05 \times \{1\text{-}0.006 \times (600\text{-nitriding or ferritic nitrocarborizing temperature (°C))}\} \times \{(\text{nitriding or ferritic nitrocarborizing time (hr)+1)/3}\} \leq \text{amount of grinding} \leq 0.2 \text{ mm... (4)}.$$

**Patentansprüche**

1. Stahl für Maschinenbauzwecke zur Verwendung zur Oberflächenhärtung, **dadurch gekennzeichnet, dass** er, in Massen-%,

C: 0,30 bis 0,60%,
Si: 0,02 bis 2,0 %,
Mn: 0,35 bis 1,5 %,
Al: 0,001 bis 0,5 %,
Cr: 0,05 bis 2,0%,
Sn: 0,001 bis 1,0%,

S: 0,0001 bis 0,021%,
N: 0,0030 bis 0,0055%,
Ni: 0,01 bis 2,0%,
Cu: 0,01 bis 2,0%,
P: 0,030% oder weniger; und
O: 0,005% oder weniger enthält,

einen Rest aus Fe und unvermeidlichen Verunreinigungen aufweist,
Gehalte an Sn, Cu, Ni, Mn und S aufweist, die die folgenden Formeln (1) und (2) erfüllen, und Gehalte an Sn und Cr aufweist, die die folgende Formel (3) erfüllen;

$$-0{,}19 \leq 0{,}12 \mathrm{xSn} + \mathrm{Cu} - 0{,}1 \mathrm{xNi} \leq 0{,}15 \ldots (1)$$

$$60 \leq \mathrm{Mn/S} \leq 300 \ldots (2)$$

$$\mathrm{Sn} \geq 0{,}2 \mathrm{xCr} \ldots (3),$$

wobei der Stahl gegebenenfalls weiter, in Massen-%, eines oder mehrere von

B: 0,0003 bis 0,005%,
W: 0,0025 bis 0,5%,
Mo: 0,05 bis 1,0%,
V: 0,05 bis 1,0%,
Nb: 0,005 bis 0,3% und
Ti: 0,005 bis 0,2% enthält,

und wobei der Stahl gegebenenfalls weiter, in Massen-%, eines oder mehrere von

Ca: 0,0005 bis 0,01%,
Mg: 0,0005 bis 0,01%,
Zr: 0,0005 bis 0,05% und
Te: 0,0005 bis 0,1% enthält.

2. Ein Stahlteil für Maschinenbauzwecke, das durch Nitrieren oder ferritisches Nitrocarburieren und anschließendes Induktionshärten von Stahl für Maschinenbauzwecke zur Verwendung zur Oberflächenhärtung, wie in Anspruch 1 angegeben, hergestellt wird, wobei das Stahlteil **dadurch gekennzeichnet ist, dass**

   (a) eine Oberflächenschicht mit einer Tiefe von 0,4 mm oder mehr von der Oberfläche aus eine nitrierte Schicht ist und

   (b) eine Vickers-Härte 650 oder mehr an der Oberflächenschicht mit einer Tiefe von 0,2 mm von der Oberfläche aus beträgt, wenn der Stahl durch Anlassen bei 300°C behandelt wird.

3. Ein Stahlteil für Maschinenbauzwecke, wie in Anspruch 2 angegeben, **dadurch gekennzeichnet, dass** in einer Schicht im Inneren der nitrierten Schicht in einer Tiefe von 5 $\mu$m oder mehr von der Oberfläche aus 5000/mm$^2$ oder mehr Poren mit einem kreisäquivalenten Durchmesser von 0,1 bis 1 $\mu$m vorliegen.

4. Ein Stahlteil für Maschinenbauzwecke, wie in Anspruch 2 oder 3 angegeben, **dadurch gekennzeichnet, dass** eine Schicht, die der Verbindungsschicht entspricht, die durch Nitrieren oder ferritisches Nitrocarburieren an der Oberflächenseite in der nitrierten Schicht gebildet ist, durch spangebende Bearbeitung entfernt wird.

5. Ein Verfahren zur Herstellung eines Stahlteils für Maschinenbauzwecke, **gekennzeichnet durch** Überführen von Stahl für Maschinenbauzwecke zur Verwendung zur Oberflächenhärtung, wie in Anspruch 1 angegeben, in eine vorgegebene Form **durch** Schmieden oder/und Schneiden, anschließendes Behandeln des geformten Stahlelements **durch** Nitrieren oder ferritisches Nitrocarburieren bei 550 bis 650°C für 0,5 bis 5 Stunden, anschließendes Behandeln desselben **durch** Induktionserwärmung bei 900 bis 1100°C für 0,05 bis 5 Sekunden zum Abschrecken und (a) Bilden einer nitrierten Schicht auf einer Oberflächenschicht mit einer Tiefe von 0,2 mm oder mehr von der Oberfläche aus und (b) Einstellen einer Vickers-Härte von 650 oder mehr an der Oberflächenschicht mit einer Tiefe von 0,2 mm von der Oberfläche aus beim Anlassen bei 300°C.

6. Ein Verfahren zur Herstellung eines Stahlteils für Maschinenbauzwecke, wie in Anspruch 5 angegeben, **gekennzeichnet durch** Durchführen des Induktionshärtens, anschließendes Abschleifen der Oberflächenschicht um eine Schleifmenge (mm), die die folgende Formel (4) erfüllt:

$$0,05x\{1-0,006x(600\text{-Nitrierungs- oder ferritische Nitrocarburierungstemperatur}$$
$$(\text{°C}))\}x\{(\text{Nitrierungs- oder ferritische Nitrocarburierungszeit}$$
$$(\text{h})+1)/3\}\leq\text{Schleifmenge}\leq0,2 \text{ mm}... (4).$$

**Revendications**

1. Acier pour durcissement de surface destiné à une utilisation structurale d'une machine, **caractérisé en ce qu'**il contient, en % en poids :

    C : 0,30 à 0,60 %,
    Si : 0,02 à 2,0 %,
    Min : 0,35 à 1,5 %,
    Al : 0,001 à 0,5 %,
    Cr : 0,05 à 2,0 %,
    Sn : 0,001 à 1,0 %,
    S : 0,0001 à 0,021 %,
    N : 0,0030 à 0,0055 %,
    Ni : 0,01 à 2,0 %,
    Cu : 0,01 à 2,0 %,
    P : 0,030 % ou moins, et
    O : 0,005 % ou moins,

le reste étant constitué de Fe et d'impuretés inévitables,
comprenant des teneurs en Sn, Cu, Ni, Mn et S répondant aux formules (1) et (2) suivantes ; et comprenant des teneurs en Sn et Cr répondant à la formule (3) suivante :

$$-0,19 \leq 0,12 \times Sn + Cu - 0,1 \times Ni \leq 0,15 \ldots (1)$$

$$60 \leq Mn/S \leq 300 \ldots (2)$$

$$Sn \geq 0,2 \times Cr \ldots (3),$$

ledit acier contenant en outre éventuellement, en % en poids, un ou plusieurs éléments parmi :

    B : 0,0003 à 0,005 %,
    W : 0,0025 à 0,5 %,
    Mo : 0,05 à 1,0 %,
    V : 0,05 à 1,0 %,
    Nb : 0,005 à 0,3 % et
    Ti : 0,005 à 0,2 %,

et ledit acier contenant en outre éventuellement, en % en poids, un ou plusieurs éléments parmi :

> Ca : 0,0005 à 0,01 %,
> Mg : 0,0005 à 0,01 %,
> Zr : 0,0005 à 0,05 %, et
> Te : 0,0005 à 0,1 %.

**2.** Pièce en acier destinée à une utilisation structurale d'une machine, qui est produite par nitruration ou nitrocarburation ferritique, puis durcissement par induction de l'acier destiné à une utilisation structurale d'une machine pour durcissement de surface selon la revendication 1, ladite pièce en acier étant **caractérisée en ce que**

(a) une couche superficielle d'une profondeur de 0,4 mm ou plus depuis la surface est une couche nitrurée, et
(b) une dureté de Vickers est de 650 ou plus au niveau de la couche superficielle d'une profondeur de 0,2 mm depuis la surface lors du traitement de l'acier par revenu à 300°C.

**3.** Pièce en acier destinée à une utilisation structurale d'une machine selon la revendication 2, **caractérisée en ce que**, au niveau d'une couche à l'intérieur de ladite couche nitrurée à une profondeur de 5 $\mu$m ou plus depuis la surface, il y a 5000 pores ou plus/mm$^2$ qui ont un diamètre équivalent en cercle de 0,1 à 1 $\mu$m.

**4.** Pièce en acier destinée à une utilisation structurale d'une machine selon la revendication 2 ou 3, **caractérisée en ce qu'**une couche qui correspond à la couche de composé qui est formée par nitruration ou nitrocarburation ferritique du côté de la surface dans ladite couche nitrurée est éliminée par usinage.

**5.** Procédé de fabrication d'une pièce en acier destinée à une utilisation structurale d'une machine, **caractérisé par** la formation de l'acier destiné à une utilisation structurale d'une machine pour durcissement de surface selon la revendication 1 en une forme prédéterminée par forgeage et/ou découpe, puis traitement de l'élément en acier formé par nitruration ou nitrocarburation ferritique à une température de 550 à 650°C pendant 0,5 à 5 heures, puis son traitement par chauffage par induction à une température de 900 à 1100°C pendant 0,05 à 5 secondes pour le refroidissement, et (a) la formation d'une couche nitrurée au niveau d'une couche superficielle d'une profondeur de 0,2 mm ou plus depuis la surface et (b) la constitution d'une dureté de Vickers de 650 ou plus au niveau de la couche superficielle d'une profondeur de 0,2 mm depuis la surface lors du revenu à 300°C.

**6.** Procédé de fabrication d'une pièce en acier destinée à une utilisation structurale d'une machine selon la revendication 5, **caractérisé par** la réalisation dudit durcissement par induction, puis le meulage de la couche superficielle en une quantité de meulage (mm) répondant à la formule (4) suivante :

$$0{,}05 \times \{1-0{,}006 \times (600 - \text{température de nitruration ou de nitrocarburation ferritique (°C))} \} \times \{(\text{temps de nitruration ou de nitrocarburation ferritique (h)} + 1)/3\} \leq \text{quantité de meulage} \leq 0{,}2 \text{ mm } \dots (4).$$

# Fig. 1

# Fig.2

(a)

NITRIDED LAYER

SURFACEMOST LAYER

100μm

(b)

POROUS LAYER (FORMER COMPOUND LAYER)

SURFACEMOST LAYER

PORES

3μm

## Fig.3

## Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6172961 A
- JP 7090363 A
- JP 2007077411 A
- WO 2010082685 A
- JP 2003105496 B